(19) **Europäisches Patentamt / European Patent Office / Office européen des brevets**

(11) **EP 2 036 959 B1**

(12) # EUROPEAN PATENT SPECIFICATION

(45) Date of publication and mention
of the grant of the patent:
**09.10.2013 Bulletin 2013/41**

(21) Application number: **07745107.8**

(22) Date of filing: **12.06.2007**

(51) Int Cl.:
*C09D 11/02* (2006.01)     *B41J 2/175* (2006.01)

(86) International application number:
**PCT/JP2007/061820**

(87) International publication number:
**WO 2007/145214 (21.12.2007 Gazette 2007/51)**

(54) **SOLVENT-RECOVERABLE AND RECYCLABLE PRINTING INK COMPOSITION AND DILUTION SOLVENT COMPOSITION AND METHOD OF RECYCLING THE RECOVERED SOLVENT**

DRUCKTINTENZUSAMMENSETZUNG MIT WIEDERGEWINNBAREM UND RECYCELBAREM LÖSUNGSMITTEL, VERDÜNNUNGS-LÖSUNGSMITTEL-ZUSAMMENSETZUNG UND VERFAHREN ZUM RECYCELN DES WIEDERGEWONNENEN LÖSUNGSMITTEL

COMPOSITION D'ENCRE D'IMPRESSION PERMETTANT LA RÉCUPÉRATION ET LE& xA; RECYCLAGE DE SOLVANT, COMPOSITION DE SOLVANT DE DILUTION ET PROCÉDÉ& xA;DE RECYCLAGE DU SOLVANT RÉCUPÉRÉ

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **12.06.2006   JP 2006162122**
**20.07.2006   JP 2006197960**
**23.08.2006   JP 2006226157**
**19.04.2007   JP 2007110868**
**11.06.2007   JP 2007153652**

(43) Date of publication of application:
**18.03.2009   Bulletin 2009/12**

(73) Proprietor: **TOYO INK MFG. CO., LTD.**
**Tokyo 104-0031 (JP)**

(72) Inventors:
• **KOFUJI, Michihisa**
**Toyo Ink Mfg. Co., Ltd.**
**Chuo-ku Tokyo 104-0031 (JP)**
• **TAKANO, Masumi**
**Toyo Ink Mfg. Co., Ltd**
**Chuo-ku Tokyo 104-0031 (JP)**
• **YASUDA, Hideki**
**Toyo Ink Mfg. Co., Ltd**
**Chuo-ku Tokyo 104-0031 (JP)**
• **NAKAGAMI, Yoshiaki**
**Toyo Ink Mfg. Co., Ltd**
**Chuo-ku Tokyo 104-0031 (JP)**

• **WATANABE, Shinichiro**
**Toyo Ink Mfg. Co., Ltd**
**Chuo-ku Tokyo 104-0031 (JP)**
• **KAWASHIMA, Hiroyuki**
**Chuo-ku Tokyo 104-0031 (JP)**
• **ISHIZUKA, Yoshimitsu**
**Toyo Ink Mfg. Co., Ltd**
**Chuo-ku Tokyo 104-0031 (JP)**
• **IRIE, Toshiyuki**
**Toyo Ink Mfg. Co., Ltd**
**Chuo-ku Tokyo 104-0031 (JP)**

(74) Representative: **Koepe, Gerd L. et al**
**Koepe & Partner**
**Robert-Koch-Strasse 1**
**80538 München (DE)**

(56) References cited:
| | |
|---|---|
| EP-A1- 1 134 239 | WO-A1-02/051644 |
| WO-A1-03/066711 | GB-A- 2 010 104 |
| GB-A- 2 253 157 | JP-A- 04 267 901 |
| JP-A- 07 247 456 | JP-A- 08 269 152 |
| JP-A- 2005 138 014 | US-A- 5 547 491 |

• **DATABASE WPI Week 200679 Thomson Scientific, London, GB; AN 2006-773465 XP002605763 & JP 2006 282773 A (TOYO INK MFG CO LTD) 19 October 2006 (2006-10-19)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 036 959 B1

**(Cont. next page)**

- DATABASE CAPLUS [Online] CHEMICAL ABSTRACTS SERVICE, COLUMBUS, OHIO, US; 17 October 1995 (1995-10-17), Sasaki, Tsutomu: "Adsorption apparatus with steam generator for recovery of water-soluble solvents from waste gases" XP002605948 Database accession no. 1996:11058 & DATABASE WPI Week 199550 Thomson Scientific, London, GB; AN 1995-388936 & JP 7 265641 A (KURIMOTO IRON WORKS LTD) 17 October 1995 (1995-10-17)
- DATABASE WPI Week 200704, Derwent Publications Ltd., London, GB; AN 2007-026646 & CN 1 757 685 A (WUXING PRINTING INK IND CO LTD JINPING D) 12 April 2006
- DATABASE CA [Online] CHEMICAL ABSTRACTS SERVICE, COLUMBUS, OHIO, US HUANG, ZHENPING: 'Printing ink' Retrieved from STN Database accession no. 2006:361037 & CN 1 757 685 A (WUXING PRINTING INK IND CO LTD [CN]) 12 April 2006 (2006-04-12)
- 'Essigsäure-n-propylester', [Online] Retrieved from the Internet: <URL:http://de.wikipedia.org/wiki/Essigs%C3 %A4ure-n-propylester> [retrieved on 2012-05-14]
- 'n-Propylacetat', [Online] 01 March 2008, XP055027056 Retrieved from the Internet: <URL: http://www.loesemittel.basf.com/portal /load/fid226743/n-Propylacetat_d_03_08.pdf> [retrieved on 2012-05-14]

Remarks:

The file contains technical information submitted after the application was filed and not included in this specification

**Description**

The present invention relates to a recyclable solvent and an ink composition containing the same. The present invention also relates to a method of recovering and recycling the vaporized solvents generated during printing.

Recently, there are increasing concerns about air pollution such as destruction of ozone layer in stratosphere, in lower atmosphere damage to agricultural products and forest resources byacidrain, and bad effects on the body by photo chemical oxidants. Laws and regulations for prevention of air pollution is becoming strict year by year. In particular in the field of gravure printing, where organic solvents have been released in greater amounts, there is increased attention to recovery and recycling of solvents as a means to overcome these problems (Non- Patent Documents 1 to 3) .

Actually in the fields of lamination adhesive and gravure printing, where ethyl acetate or toluene is used as a single solvent, solvents are already recovered and recycled. However, in gravure printing for other applications (such as laminate printing, cover printing, paper printing and aluminum printing), a variety of inks are used according to applications and thus, the number of solvents increases inevitably considering the solubility of the resins and drying speed (Non-Patent Documents 1 to 3).

When inks for various applications are used in a single printingmachine or at a single factory or when solvents recovered at various places are collected, conventional printing inks and dilution solvents gave the mixture unstable in composition, because the mixture contained various components. For reuse, the recovered solvent should be fractioned into single solvents by using a large- scale distillation column. The large- scale distillation column demands large initial and running costs. It also demanded a great amount of distillation energy, leading to consumption of a large amount of oil resources, and discharged carbon dioxide in a great amount. Thus, there has been a problem that the reuse did not lead to any cost reduction by recycling or any improvement in environmental friendliness.

Patent Document 1: Japanese Patent Application Laid- Open No. 07- 247456

Non- Patent Document 1: Hideki Yasuda, J. Japanese Printing Society, Vol. 43, No. 6, 404- 410 (2006) .

Non- Patent Document 2: Masashi Senmoto, J. Japanese Printing Society Vol. 44, No. 1, 8- 14 (2007) .

Non- Patent Document 3: Japan Environmental management Association for Industry, Ed., Ministry of Economy, Trade and Industry contract survey report in 2005, "Studies on Measurements against Environmental Hazardous Substances (measures to prevent volatile organic compound (VOC) emission) ", March, 2006.

The document EP-A 1 134 239 relates to a potentially hydrophilic resin which comprises at least monomer units readily saponifiable under alkaline conditions to form carboxyl groups, carboxyl-containing monomer units, and hydroxyl-containing monomer units, and a potentially hydrophilic resin composition which comprises, in a liquid medium, the potentially hydrophilic and an adhesive component or film-forming component. A resin recycling method is provided for an article with a coating applied on a surface thereof: A coating on the surface of the article is formed with the potentially hydrophilic resin composition, and subsequent to use of the article, the article is treated with alkaline water to saponify methyl acrylate in the coating such that the coating is caused to swell, and the coating so swollen is removed from the article.

The document WO 03/066,711 discloses environmentally friendly solvents and solvent/polymer systems for a variety of applications which may be formulated with certain organic compounds.

The document WO 02/051,664 relates to an ink-printed substrate web exhibiting ink rub-off resistance. The substrate web is printed with an ink composition to form an ink film on the substrate web, the ink-printed substrate web being coated with a coating composition to form a coating film on the ink film. At least one of the ink composition and the coating composition forms a cross-linked structure within the film thereof and forms a cross-linked structure with the other composition between the ink film and the coating film. A disposable absorbent article using the ink-printed substrate web is also disclosed.

The document DATABASE CA [Online] CHEMICAL ABSTRACTS SERVICE, COLUMBUS, OHIO, US; HUANG ZHENPING: "Printing ink", retrieved from STN Database accession no. 2006:361037 XP0550277056 discloses ink compositions comprising a polyurethane resin (polyurethane liquor), one colorant ($TiO_2$) two or more hydrocarbon solvents (ethyl acetate, n-propyl acetate and isopropanol).

The document JP 08 269152 A discloses the production of a polyurethane resin having a low alcohol content and which is useful for a gravure ink. Also, a printing ink composition is disclosed which makes use of the polyurethane resin. The polyurethane resin contains a urea bond by reacting a polymer polyol with an excessive amount of 4,4'-diphenylmethane diisocyanate to give a prepolymer containing a terminal isocyanate group and reacting the prepolymer with a chain extender and/or a reaction terminator. A solvent comprising ≥80wt% of an ester-based solvent and ≤20wt% of an alcohol-based solvent is used as a solvent.

There has been a need for a method of recovering volatile solvents generated during printing and recycling the solvents easily. There was also a need for easy recycling solvents and printing inks containing the same. Further, there was a need for recyclable solvents higher in printing efficiency and printing inks containing the same.

An aspect of the present invention relates to a recyclable printing ink composition (herein, referred to as solvent-recoverable and recyclable printing ink composition), comprising a polyurethane resin, one or more colorant(s) and two or more solvents selected from hydrocarbon solvents, ketone solvents, ester solvents, alcoholic solvents and glycol ether solvents, wherein 95 % by weight or more of the total amount of the solvents consist of two organic solvent components, the two organic solvent components being n-propyl acetate and isopropyl alcohol; and the component ratio (by weight) of n-propyl acetate to isopropyl alcohol is in the range of from 70 : 30 to 85 : 15, wherein the polyurethane resin is formed from a polymer polyol, an organic isocyanate compound and a chain extender as a main binder, and the organic isocyanate compound is isophorone diisocyanate.

The solvents may include methylcyclohexane, methylethylketone, n-propyl acetate, isopropyl alcohol and propylene glycol monomethylether. The composition may comprise three or more of the solvents above.

In accordance with the invention 95% or more of the total amount of the solvents comprise two organic solvent components. The two organic solvent components are n-propylacetate and isopropyl alcohol. The component ratio (by weight) of n-propyl acetate to isopropyl alcohol is in the range of 70:30 to 85:15.

Also in accordance with the present invention the solvent-recoverable and recyclable printing ink composition, comprises a polyurethane resin formed with a polymer polyol, an organic isocyanate compound and a chain extender as the main binder and the solvents above, and wherein the organic isocyanate compound is isophorone diisocyanate.

Also disclosed, but no part of the present invention is a solvent-recoverable and recyclable dilution solvent composition, characterized by being identical with the organic solvents in the solvent-recoverable and recyclable printing ink composition above.

Also disclosed, but no part of the present invention is a coated article, comprising the solvent-recoverable and recyclable printing ink composition above.

Also disclosed, but no part of the present invention a laminated article, prepared by coating the solvent-recoverable and recyclable printing ink composition above on a film, and laminating or compression-bonding the film thus obtained.

Also disclosed, but no part of the present invention is amethodofrecoveringandrecyclingsolvents, comprising, during printing or coating of solvent-recoverable and recyclable printing ink composition comprising the above solvents, a step of recovering solvents vaporized in a solvent recovery apparatus, a step of separating the solvents obtained into one or more single solvents and/or one or more azeotropic compositions of two or more solvents by multi-stage distillation, a step of analyzing the composition of the obtained azeotropic composition if necessary, a step of adjusting the composition of the separated solvents if necessary, and a step of recycling them as a printing ink raw material and/or dilution solvent raw material. The solvents may comprise at least three kinds of solvents selected from hydrocarbon solvents, ketone solvents, ester solvents, alcoholic solvents and glycol ether solvents. In addition, the solvents may be at least three kinds of solvents selected from methylcyclohexane, methylethylketone, n-propyl acetate, isopropyl alcohol and propylene glycol monomethylether. The method may further comprise, after the step of recovering the solvents and before the step of separation, a step of removing water by at least one method selected from membrane separation, adsorption, specific density difference separation and distillation.

Yet another aspect of the present invention relates to a method of recovering and recycling solvents, comprising, during printing or coating with a solvent-recoverable and recyclable printing ink according to the invention as described above comprising two organic solvents in an amount of 95% or more, a step of recovering solvents vaporized in a solvent recovery apparatus, a step of analyzing the composition of the solvents and a step of recycling it as a printing ink raw material and/or a dilution solvent raw material. The analysis step is preferably carried out by at least one method selected from gas chromatography, liquid chromatography, infrared absorption spectrometry, refractive index measurement, density ratio measurement, conductivity measurement, nuclear magnetic resonance absorption method and odor test method. The solvents comprise n-propyl acetate and isopropyl alcohol at a component ratio (by weight) of n-propyl acetate to isopropyl alcohol is preferably in the range of 70:30 to 85:15.

Also disclosed, but no part of the present invention is a printing ink composition, comprising the solvents separated into one or more single solvents and/or one or more azeotropic compositions of two or more solvents by the method above.

Also disclosed, but no part of the present invention is a printing ink dilution solvent composition, comprising the solvents separated into one or more single solvents and/or one or more azeotropic compositions of two or more solvents by the method above.

The disclosures in the present description relate to the subjects of the patent applications: Japanese Patent Application No. 2006-162122 (filed on June 12, 2006), Japanese Patent Application No. 2006-197960 (filed on July 20, 2006), Japanese Patent Application No. 2006-226157 (filed on Aug. 23, 2006), Japanese Patent Application No. 2007-110868 (filed on Apr. 19, 2007) and Japanese Patent Application No. 2007-153652 (filed on June 11, 2007).

According to an aspect of the present invention, it is possible to recover the solvents vaporized during printing and recycle the solvents easily. According to another aspect of the present invention it is also possible to provide an easily recyclable solvent composition and a printing ink composition comprising the same. According to another aspect of the present invention, it is possible to provide a recyclable solvent composition higher in printing efficiency and a printing ink containing the same.

According to yet another aspect of the present invention, it is easily possible to recycle solvents even if the recovered solvents generated in more than one printing machines, facilities or companies are mixed together.

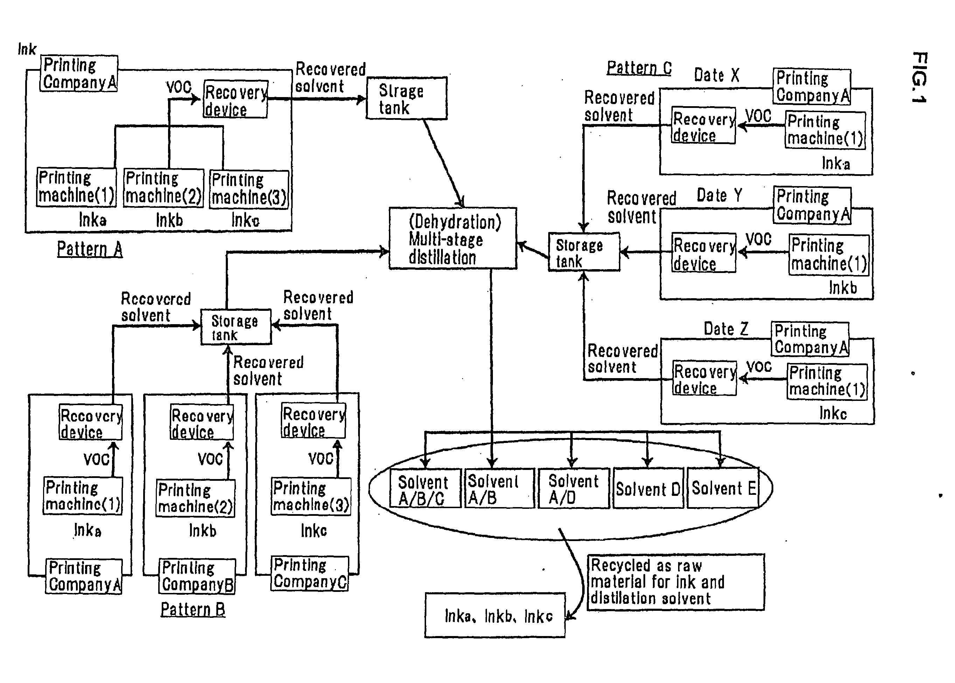

Fig. 1 is a chart showing examples of the solvent recovery recycling according to the present invention.

The solvent recovery recycling method according to the present invention of recovering and recycling the solvents generated during printing or coating by using the solvent-recoverable and recyclable printing ink composition according to the invention comprises a step of recovering solvents vaporized in a solvent recovery apparatus, and a step of analyzing the composition of the solvents, and a step of recycling the solvents as a printing ink raw material or a dilution solvent raw material.

The solvent-recoverable and recyclable printing ink composition contains solvents, resin and colorant(s) wherein 95% by weight or more of said solvents consists of n-propyl acetate and isopropyl alcohol at the ratios described above.

The solvent for use in the solvent-recoverable and recyclable printing ink according to the present invention may further comprise hydrocarbon solvents, ketone solvents, ester solvents, alcoholic solvents, and glycol ether solvents. Most resins are soluble in a hydrocarbon solvent, a ketone solvent, an ester solvent or an alcoholic solvent. Glycol ether solvents are advantageous for adjusting drying speed. Therefore, inks in most applications can be designed in combination of these solvents. Three or more solvents among them may be used as mixed, or two solvents may be used as mixed. When two solvents are mixed, combination of n-propyl acetate and isopropyl alcohol is used. When two solvents are used in combination, it is possible to prepare an ink more favorable in printability than conventional inks, allowing easy recycling of the solvents after compositional adjustment.

Examples of the hydrocarbon solvents include, but are not limited to, aliphatic hydrocarbon solvents such as n-hexane, n-heptane and n-octane; alicyclic hydrocarbon solvents such as cyclohexane, methylcyclohexane, ethylcyclohexane, cycloheptane and cyclooctane; and aromatic hydrocarbon solvents such as toluene. Examples of the ketone solvents include, but are not limited to, acetone, methylethylketone, methylisobutylketone, dimethyl carbonate and the like. Examples of the ester solvents include, but are not limited to, methyl acetate, ethyl acetate, n-propyl acetate, butyl acetate, propylene glycol monoethylether acetate and the like. Examples of the alcoholic solvents include, but are not limited to, methanol, ethanol, n-propanol, isopropyl alcohol, butanol and the like. Examples of the glycol ether solvents include, but are not limited to, propylene glycol monomethylether, propylene glycol monoethylether and the like.

Considering the solubility, drying efficiency and printing working environment, the hydrocarbon solvents are preferably aliphatic solvents, and among them, methylcyclohexane is preferable. The ketone solvents are preferably methylethylketone, because it has a drying speed favorable for gravure printing and relatively low level of odor. The ester solvents are preferably n-propyl acetate because it has favorable drying speed and favorable solubility, or ethyl acetate because it is used widely as a solvent in production of various resins and has high dissolving potential for many resin system. The alcoholic solvents are preferably isopropyl alcohol, because it has a favorable drying speed and a relatively low level of odor, and the ink prepared with an isocyanate-based hardening agent is superior in storage stability. The glycol ether solvents are preferably propylene glycol monomethylether, because it has a drying speed favorable as a slow-vaporization solvent and relatively low level of odor.

The favorable blending rate of respective solvents varies according to various conditions. For example, (1) the blending rate of a hydrocarbon solvent is preferably 0 to 90 wt % in all solvents, for assurance of solubility for example when a rubber or petroleum resin is used; (2) that of a ketone solvent, preferably 0 to 90 wt %, for assurance of solubility for example when a vinyl chloride-vinyl acetate copolymer resin is used; (3) that of an ester solvent, preferably 0 to 90 wt %, for assurance of solubility for example when a polyurethane resin is used, (4) that of an alcoholic solvent preferably 0 to 50 wt %, because a rate of more than 50% may cause brushing by absorption of a great amount of water during printing and lead to deterioration in wettability to the base material; (5) that of an glycol ether solvent, preferably 0 to 20 wt %, because a rate of more than 20% leads to increase in the residual amount in print and adverse effects on the downstream processing and quality.

In accordance with the present invention 95% by weight or more of the total amount of the solvents consist of two organic solvent components: n-propyl acetate and isopropyl alcohol, and used together with a polyurethane resin the ratio by weight thereof is in the range of from 70:30 to 85:15, considering the solubility of the polyurethane resin for prevention of fluctuation in solvent composition during continued use.

When the solvent is a two component system of ethyl acetate and isopropyl alcohol and used with a polyurethane resin which is also disclosed, but no part of the present invention, the ratio is preferably 20:80 to 50:50 for favorable drying speed and more preferably 30:70 to 50:50 for favorable solubility of the polyurethane resin.

These solvents may be selected appropriately, according to the solubility of the resin system contained in the printing ink composition used and the adjustment of drying rate for favorable printing efficiency. A smaller number of solvent species is favorable for recovery and recycling of the solvents with smaller energy. Alternatively, use of many solvent species allows design of printing ink compositions favorably used in a variety of applications. A solvent content of 20 to 90 wt % with respect to the total weight of the ink is preferable, and a content of 40 to 80 wt % is more preferable, from the viewpoint of the viscosity favorable for the storage stability and the printability of the resulting ink.

In addition to the solvents described above, small amounts of some unintended solvent components, for example derived from additives or from the surrounding atmosphere may contaminate the ink composition during printing. However, these solvents may be contained, if the kinds and/or the amounts thereof are in the level that does not affect the steps of printing, recovery and others.

Examples of the colorants used in the solvent-recoverable and recyclable printing ink composition according to the present invention include inorganic pigments, organic pigments and dyes.

Examples of white inorganic pigments include, but are not limited to, titanium oxide, zinc oxide, zinc sulfide, barium sulfate, calcium carbonate, chromium oxide, silica and the like. Among them, use of titanium oxide is favorable, from the points of coloring efficiency, masking efficiency, chemical resistance, weather fastness.

Examples of non-white inorganic pigment include, but are not limited to, pigments such as carbon black, aluminum, and mica. Aluminum is powder or paste, but aluminum paste is preferable from the points of handling efficiency and safety; and use of leafing or non-leafing aluminum paste is determined properly according to the desired brightness and density.

Examples of the organic pigments include, but are not limited to, azo- based, phthalocyanine- based, anthraquinone- based, perylene- based, perynone- based, quinacridone- based, thioindigo- based, dioxazine- based, isoindolinone- based, quinophtharone- based, azomethine azo- based, diketo- pyrrolopyrrole- based, isoindoline- based and other pigments. Copper phthalocyanine is preferably used in blue ink, and C.I. Pigment No Yellow 83 is preferably used in transparent yellow ink, from the points of cost and lightfastness.

The colorants are preferably contained in an amount sufficient for assuring the density and coloring efficiency of the printing ink composition, i.e., at a rate of 1 to 50 wt %, with respect to the total weight of the printing ink. These colorants may be used alone or in combination of two or more.

The resin alone may be used for stable dispersion of the pigment in organic solvents, but a dispersant may be used in combination, for more stable dispersion of the pigment. The dispersant for use may be an anionic, nonionic, cationic, ampholytic, or other surfactant. The dispersant is preferably contained in an amount of 0.05 wt % or more, with respect to the total weight of the ink for improvement in storage stability and in an amount of 5 wt % or less for improvement in lamination compatibility. The content is more preferably in the range of 0.1 to 2 wt %.

These pigments may be used alone or in combination of two or more, for adjustment of color tone and density. Also, dyes may be used alone or in combination, but use of a pigment is preferable from the viewpoint of lightfastness.

The resin for use in the solvent-recoverable and recyclable printing ink composition according to the present invention may be selected properly according to the application and the base material used and comprises a polyurethane resin as described above. Examples of further resins include polyurethane/urea resins, vinyl chloride-vinyl acetate copolymer resins, chlorinated polypropylene resins, ethylene-vinyl acetate copolymer resins, vinyl acetate resins, polyamide resins, nitrocellulose resins, acrylic resins, polyester resins, alkyd resins, polyvinyl chloride resins, rosins, rosin-modified maleic acid resins, terpene resins, phenol-modified terpene resins, ketone resins, cyclic rubbers, chlorinated rubbers, butyral, petroleum resins, and the like. One or more of these resins may be used in combination with the polyurethane resin. The resin is preferably contained in an amount of 5 to 25 wt % with respect to the total weight of the ink.

Requirements in film physical properties of the resin vary according to application of the printing ink, and thus, the kind of the resin contained in ink varies. For example, major applications of gravure printing ink include printing on laminate film, cover film, paper, and aluminum foil. The ink for laminate film preferably contains a polyurethane/urea resin, a polyurethane resin, a chlorinated polypropylene resin, oravinyl chloride-vinyl acetate copolymer resin. The ink for cover film preferably contains a polyamide resin. The ink for paper preferably contains a nitrocellulose resin or an acrylic resin. The ink for aluminum foil preferably contains a nitrocellulose resin, a chlorinated rubber resin or a vinyl resin.

Among the resins above, polyurethane resins are soluble when a mixture of ester solvents and alcoholic solvents is used. Chlorinated polypropylene resins are soluble when a suitable amount of hydrocarbon solvents is used; vinyl chloride-vinyl acetate copolymer resins are soluble when a suitable amount of ketone solvents is used; polyamide resins are soluble when a suitable amount of alcoholic solvents is used; nitrocellulose resins are soluble when a suitable amount of ester solvents is used; acrylic resins are soluble when a suitable amount of hydrocarbon or ester solvents is used; and chlorinated rubber resins are soluble when a suitable amount of hydrocarbon solvents is used.

Alternatively, in the major application of printing ink, i.e., in printing of laminate film, a polyurethane resin is often used as themainbinder, for reduction in the amount of the solvents remaining in print and also from the point of compatibility with extruding laminate processing. The polyurethane resin for use is, for example, a polyurethane resin used in common ink, paint or recording agent.

Such a polyurethane resin can be produced by using various known polyols commonly used. The polyols may be used alone or in combination of two or more.

The polyol is preferably converted into a urethane-modified polyol in reaction with a polyisocyanate and a chain extender. The urethane-modified polyol can be produced by a prepolymer method of producing a terminal isocyanate group-containing prepolymer in reaction of a polyol and a polyisocyanate, as needed in the presence of a solvent inert to the isocyanate group and additionally a urethane-converting catalyst, at a temperature of 10 to 150°C and then obtaining a polyurethane polyol resin in reaction of the prepolymer with a chain extender. Alternatively, it can be produced by a known method, such as one-shot method, of obtaining a polyurethane polyol resin in a single reaction of an organic polyol compound and a polyisocyanate compound with a chain extender.

Examples of the polyols include:

polyether polyols (1) of polymers or copolymers such as of methylene oxide, ethylene oxide and tetrahydrofuran; saturated or unsaturated low- molecular- weight polyols (2) such as ethylene glycol, 1, 2- propanediol, 1, 3- propanediol, 2- methyl- 1, 3 propanediol, 2- ethyl- 2butyl- 1, 3 propanediol, 1, 3- butanediol, 1, 4- butanediol, neopentylglycol, pentanediol 3- methyl- 1, 5- pentanediol, hexanediol, octanediol, 1, 4- butynediol, 1, 4- butylenediol, diethylene glycol, triethylene glycol, polypropylene glycol, dipropylene glycol, glycerin, trimethylolpropane, trimethylolethane, 1, 2, 6- hexanetriol, 1, 2, 4- butanetriol, sorbitol, and pentaerythritol;

polyester polyols (3) obtained by dehydration condensation or polymerization of the low-molecular weight polyol (2) with a polyvalent carboxylic acid such as adipic acid, phthalic acid, isophthalic acid, terephthalic acid, maleic acid, fumaric acid, succinic acid, oxalic acid, malonic acid, glutaric acid, pimelic acid, suberic acid, azelaic acid, sebacic acid, trimellitic acid, or pyromellitic acid, or the anhydride thereof;

polyester polyols (4) obtained by ring- opening polymerization of a cyclic ester compound (e.g., lactone) such as polycaprolactone, polyvalerolactone or poly ($\beta$- methyl- $\gamma$- valerolactone) ;
polycarbonate polyols (5) obtained in reaction of the low- molecular weight polyol (2), for example, with dimethyl carbonate, diphenyl carbonate, ethylene carbonate, phosgene or the like;

polybutadiene glycols (6);
glycols (7) obtained by addition of ethylene oxide or propyleneoxide to bisphenol A;
acrylpolyols (8) obtained by copolymerization of a compound having one or more hydroxyethyl, hydroxypropyl acrylate or hydroxybutyl acrylate, or the corresponding methacrylate derivative, for example with acrylic acid or methacrylic acid, or the ester thereof;
polyether polyols (9) obtained by polymerization of an oxirane compound such as ethylene oxide, propyleneoxide, butyleneoxide, or tetrahydrofuran by using a low-molecular weight polyol such as water, ethylene glycol, propylene glycol, trimethylolpropane, or glycerol as initiator; and the like. In particular, polypropylene glycol is preferable.

The polyisocyanate used in the urethane- modified polyol is isophorone diisocyanate. This diisocyanate compound may be used alone or as a mixture of two or more diisocyanates, which include various known aromatic diisocyanates, aliphatic diisocyanates, alicyclic diisocyanates and others commonly used in production of polyurethane resins. Specific examples thereof include 1, 5- naphthylene diisocyanate, 4, 4'- diphenylmethane diisocyanate (MDI), 4, 4'- diphenyldimethylmethanediisocyanate, 4, 4'- dibenzylisocyanate, dialkyldiphenylmethane diisocyanate, tetraalkyldiphenylmethane diisocyanate, 1, 3- phenylene diisocyanate, 1, 4- phenylene diisocyanate, tolylene diisocyanate, butane- 1, 4- diisocyanate, hexamethylene diisocyanate, isopropylene diisocyanate, methylene diisocyanate, 2, 2, 4- trimethylhexamethylene diisocyanate, lysine diisocyanate, cyclohexane- 1, 4- diisocyanate, xylylene diisocyanate, dimethyl diisocyanate, dicyclohexylmethane- 4, 4'- diisocyanate, 1, 3- bis (isocyanatomethyl) cyclohexane, methylcyclohexane diisocyanate, norbornane diisocyanate, m- tetramethylxylylene diisocyanate, 4, 4- diphenylmethane diisocyanate, tolylene diisocyanate, bis- chloromethyl- diphenylmethane diisocyanate, 2, 6- diisocyanatobenzyl chloride, dimer diisocyanates (dimer acids having isocyanate groups in place of carboxylic groups), and the like.

Examples of the chain extenders for use in production of the urethane- modified polyol include ethylenediamine, propylenediamine, hexamethylenediamine, diethylenetriamine, triethylenetetramine, isophoronediamine, and dicyclohexylmethane- 4, 4'- diamine, as well as amines containing hydroxyl groups in the molecule such as 2- hydroxyethylethylenediamine, 2- hydroxyethylpropyldiamine, 2- hydroxyethylpropylenediamine, di- 2- hydroxyethylethylenediamine, di- 2- hydroxyethylenediamine, di- 2- hydroxyethylpropylenediamine, 2- hydroxypropylethylenediamine, di- 2- hydroxypropylethylenediamine, and di- 2- hydroxypropylethylenediamine. These chain extenders may be used alone or as a mixture of two or more.

In addition, a monovalent active hydrogen compound can be used favorably as a terminal blocking agent for termination of the reaction. Examples of the compounds include dialkylamines such as di-n-butylamine and alcohols such as ethanol and isopropyl alcohol. In particular if carboxyl groups are desirably introduced into the polyurethane resin, an amino acid such as glycine or L-alanine may be used as the reaction terminator. These terminal blocking agents may be used alone or as a mixture of two or more.

In production of a prepolymer, the amounts of the polyol and the polyisocyanate are preferably adjusted at an equivalence ratio NCO/OH of polyisocyanate (F) isocyanate group to organic polyol compound hydroxyl group in the range of 1.1 to 3.0. When the ratio is less than 1.1, it is often difficult to obtain a sufficient alkali-resistant polymer, while a ratio of more than 3.0 leads to deterioration in solubility of the obtained prepolymer.

Use of a solvent in reaction is preferable for control of the reaction. The solvent for use is preferably a solvent dissolving the polyurethane adhesive composition, and favorable examples thereof include ketones such as acetone, methylethylketone, methylisobutylketone, and cyclohexanone; ethers such as dioxane and tetrahydrofuran; aromatic hydrocarbons such as toluene and xylene; esters such as ethyl acetate and butyl acetate; and halogenated hydrocarbons such as chlorobenzene and perchlene. These solvents may be used alone or as a mixture of two or more.

A catalyst may be used additionally in the urethanation reaction. Examples of the catalysts favorably used include tertiary amine-based catalysts such as triethylamine and dimethylaniline; and metallic catalyst such as tin and zinc. These catalysts are used normal in an amount in the range of 0.001 to 1 mol % with respect to the polyol compound.

Reaction of the prepolymer obtained above having isocyanate groups at the terminals with a chain extender such as diol, diamine, or triol at 10 to 80°C gives a high-molecular-weight polyurethane resin having active hydrogen groups at the terminals.

The terminal blocking agent, when added, may be used together with a chain extender for chain-extending reaction, or alternatively, a terminal blocking agent may be added for termination of the reaction, after the chain-extending reaction proceeds to some extent with a chain extender. On the other hand, the molecular weight can be adjusted without use of a terminal blocking agent, but, in such a case, a method of adding the prepolymer to a solution containing a chain extender is preferable from the point of reaction control.

The terminal blocking agent is used for control of the molecular weight. Increase in amount leads to decrease in molecular weight of the resulting polyurethane resin. The equivalence ratio of the amino and hydroxyl groups in chain extender to the amino and hydroxyl groups in terminal blocking agent is preferably in the range of 0. 5 to 5.0, although it varies according to the reactivity of the chain extender and the terminal blocking agent to the prepolymer. A ratio of more than 5.0 may result in deterioration in dry lamination efficiency by increase in molecular weight, while a ratio of less than 0.5 in lowering in molecular weight and in deterioration in initial adhesive strength.

The reaction is favorably carried out, while the equivalence ratio of the total of the amino and hydroxyl groups in chain extender and terminal blocking agent to the isocyanate groups in the prepolymer is kept in the range of 1.1 to 3.0, preferably 1.5 to 2.0. When the ratio is large and the amount of the chain extender or the terminal blocking agent used is large, the reagent may remain unreacted, often leaving unpleasant odor.

The solvent-recoverable and recyclable printing ink composition according to the present invention may contain additionally, as needed, various other additives such as extender pigment, leveling agent, antifoam, crosslinking agent, hardening agent, wax, silane-coupling agent, antirust agent, antiseptic agent, plasticizer, infrared absorbent, ultraviolet absorbent, lightfastness improver, fragrance, and flame retardant.

The solvent-recoverable and recyclable printing ink composition according to the present invention can be produced by using a commonly used dispersing machine, such as dissolver, roller mill, ball mill, pebble mill, attriter, or sand mill. If air bubbles, unpredicted bulky particles, or the like are present in the solvent-recoverable and recyclable printing ink composition, they are preferably removed, for example, by filtration for prevention of deterioration in printing quality. Any known filter may be used for the filtration.

The viscosity of the solvent-recoverable and recyclable printing ink composition according to the present invention is preferably 10 mPa·S or more for prevention of sedimentation of the pigment, and preferably 1000 mPa·S or less from the viewpoints of processability during production of printing ink and during printing and also printing compatibilities such as print staining resistance and leveling efficiency. The viscosity is more preferably 10 to 500 mPa·S. The viscosity in the present invention is a value obtained by using a rotating viscometer (BM viscometer, measured at 20°C). The viscosity of the solvent-recoverable and recyclable printing ink composition can be adjusted properly by selecting the kinds and amounts of the raw materials used such as resin, colorant, solvent, and others. The viscosity of the solvent-recoverable and recyclable printing ink composition can also be adjusted by modifying the particle diameter and the particle diameter distribution of the pigment used in the composition.

Examples of the methods of printing or coating the solvent-recoverable and recyclable printing ink composition according to the present invention include printing methods such as gravure printing, flexographic printing and letterpress printing and coating methods such as roll coating, spray coating and dip coating. The solvent-recoverable and recyclable printing ink composition is printed on a base material by one of the printing methods above, and fixed by vaporization of the solvents in an oven.

A coated article for which no protection is sought can be prepared by coating the solvent-recoverable and recyclable printing ink composition according to the present invention on a base material by the printing method above and fixing it by drying in an oven. Examples of the base materials include film-shaped and sheet-shaped base materials of various resins including polyolefins such as polyethylene and polypropylene, polyesters such as polyethylene terephthalate, polycarbonate and polylactic acid, polystyrene resins such as polystyrene, AS resins and ABS resins, polyvinyl chloride, polyvinylidene chloride, cellophane, paper, aluminum; and the composite materials thereof. The base material may be previously surface-finished. Examples of the surface finishing include vapor deposition of metal oxide, coating with polyvinylalcohol, and corona treatment.

A laminated article for which no protection is sought can be prepared by coating an anchor coat on the printing or coating surface of the print and additionally a laminate layer thereon. Examples of the anchor-coating agents include imine-based, isocyanate-based, polybutadiene-based and titanium-based coating agents. The laminate layer may be formed by a known lamination step. The known lamination steps include a common extrusion lamination method of laminating a molten polyethylene resin, a dry lamination method of coating an adhesive agent for example based on polyether urethane or polyester urethane on a printing surface and laminating a plastic film thereon, and a direct lamination method of applying a molten polypropylene directly on the printing surface. The laminate layer may be, for example, an aluminum foil, a metal vapor deposition film, and a polyethylene film.

The vaporized solvents are recovered in a solvent recovery apparatus. The solvent recovery apparatus is preferably installed in the printing machine, because transportation of the vaporized solvents are undesirable, but may be installed separately from the printing machine. The solvents can be recovered in various patterns. For example, as shown in pattern A of Fig. 1, volatile organic solvents (VOCs) generated in different printing machines (printing machines (1) to (3)) in a printing company (printing company A) may be recovered in one solvent recovery apparatus. Alternatively as shown in pattern B, volatile organic solvents (VOCs) generated in printing machines (printing machines (1) to (3)) in different printing companies (printing companies A to C) may be recovered in different solvent recovery apparatuses. Yet alternatively as shown in pattern C, volatile organic solvents (VOCs) generated from the same printing machine (printing machine (1)) in the same company (printing company A) on different days may be recovered in a solvent recovery apparatus.

The vaporized solvents are recovered by separating the solvent vapor from the air. Specific examples of the methods favorably used include, but are not limited to, condensation method, compression method, absorption method and adsorption method. The method used is selected properly, by taking into consideration of the composition, physical properties, chemical properties, concentrations, and generation amounts (treatment amounts) of solvent vapors as well as the impurities contained therein, desired recovery rate, and properties of the recovered solvents. In particular, gas adsorption method by using an absorbent, which is favorable from the point of recovery rate and cost, is used generally.

Examples of the absorbents include, but are not limited to, activated carbon, porous silicas such as silica gel, zeolite, various clays, alumina, iron oxide (iron hydroxide gel), magnesium perchlorate, and ion-exchange resins. Among them, activated carbon, a porous silica such as silica gel, or zeolite, which has large specific surface area, is favorably selected. The shape of the absorbent may be, for example, particulate or fibrous, and is selected properly according to the recovery system used, and, for example, the absorbent may be particulate when used in fluidized bed or fixed bed, while fibrous when used in fixed bed.

The components in the recovered solvents may be restricted by the solvents used during printing as described above, but the component ratio may vary according to the characteristics of the recovery device. For example, in a recovery device containing activated carbon as absorbent, polar alcohols for example are less easily recovered because of low absorption efficiency, and high boiling point substances are less easily desorbed depending on the temperature setting during desorption.

The solvents captured by the absorbent are desorbed, for example, by introduction of an inert gas such as air or nitrogen or heated gas such as steam and/or by treating it under reduced pressure, and then liquefied and collected in a storage tank shown in each pattern of Fig. 1. The solvents have water content generally increased during absorption/ desorption process. In particular, direct distillation of the solvents as it may give a miture having unintended water content, because of azeotropic distillation of solvent components with water.

Thus, a step of removing water from the recovered solvents may be installed additionally. Water is preferably removed, for example, by membrane separation by using a polymer film such as polyimide film, a ceramic film, or a zeolite film, adsorption by using for example silica gel, separation by using the difference in specific density, or distillation. The water removal process may not be needed, if it is possible to prevent contamination of water by control of the operation condition, e.g., the humidity during absorption and desorption.

When the solvents obtained by recovery of vaporized solvents contain three or more solvents, the method according to the present invention includes a step of separating the mixed solvents into one or more single solvents, that is, mono solvents or pure solvents, and/or one or more azeotropic mixtures of two or more solvents by multi-stage distillation. The multi-stage distillationmay be carried out by common distillation operation. Specifically, it may be carried out by batchwise distillation or continuous distillation. Because it is difficult theoretically and also practically in batchwise distillation to obtain stabilized distillates, as the condition in the distillation column changes continuously, use of continuous distillation is preferable for industrial purpose.

Distillation columns are classified roughly into plate columns and packed columns, and examples of the former columns include perforated plate column, bubble column (baffle cup column), and valve column, and examples of the latter columns include those containing various packing materials. The perforated plate column is simple structurally, lower in production cost, and lower in pressure drop, but disadvantageously becomes less stable in operation when the flow rate of the vapor drops, because the condensed vapor drops out of the holes therein. The bubble column, a traditionally frequently used column, is disadvantageously higher in production cost and higher in vapor pressure drop, but advantageously allows continued operation even when the flow rate of the gas and liquid fluctuates. The valve column, which is more complex structurally than the perforated plate column, controls its valve operation by itself according to the flow rate of the vapor and has no such disadvantage like that of the perforated plate column. The packed column is a column filled with a packing material such as Raschig rings, wherein the components are distributed between the liquid flowing down along the surface of the packing material and the vapor flowing upward through the opening that are in contact with each other. The distillation column is selected properly according to the desired processing capacity and cost, and columns may be used in combination.

The performance of a distillation column is generally expressed with its theoretical plate number, and the plate number is desirably higher for higher separation efficiency. The theoretical plate number can be controlled by the shape of the distillation column, the capacities of reboiler and condenser, and the operational condition (heating condition, reflux ratio, distillation rate), and is selected properly according to the desired processing capacity and cost and the desired properties of the recycled solvents such as purity.

Alternatively, the solvents may be separated as needed by extraction distillation or azeotropic distillation by adding one or more other solvents to the recovered solvent additionally. The extraction distillation is a distillation method of separating a particular component by adding a nonvolatile (high- boiling- point) liquid and thus shifting the equilibrium, and, for example, rectification of an azeotropic mixture of nitric acid and water in the presence of conc. nitric acid added gives conc. nitric acid from the column top. The azeotropic distillation is a distillation method of separating an azeotropic mixture by addition of a volatile liquid, and, for example, rectification of an azeotropic mixture of ethanol and water in the presence of added benzene gives an three- component azeotropic mixture of ethanol, water and benzene. Use of this method allows separation and recycling of desired one or more single solvents and/or desired one or more mixtures of solvents.

The method according to the present invention includes a step of reusing the recovered solvents as printing ink raw materials and/or dilution solvent raw materials. The solvents separated by distillation of the recovered solvents are obtained in a stabilized composition, and can be recycled as a raw material during production of printing ink raw material and also as a raw material for dilution solvent.

The solvent-recoverable and recyclable printing ink composition according to the present invention contains colorants, resins, and solvents, and may contain as needed various additives. The solvent-recoverable and recyclable printing ink is coated on a base material by a printing process such as gravure printing or flexographic printing; the solvents contained in the solvent-recoverable and recyclable printing ink composition are vaporized in a dryer such as oven; and the vaporized solvents are recovered in a recovery device containing an absorbent such as activated carbon. The solvents recovered may have a composition different from that of the original ink, because of the difference in adsorption efficiency among components, but in the recovered solvent-recycling method according to the present invention, the recovered solvents are obtained by distillation and fractionated into one or more single solvents and/or one or more azeotropic compositions of two or more solvents by multi-stage distillation, and the distillates are used for recycling after separation.

Examples of the multi-stage distillation of azeotropic solvent composition include the followings (i) to (vi):

(i) In the case of a system of methylcyclohexane, methylethylketone, n-propyl acetate, isopropyl alcohol and propylene glycol monomethylether, a mixed solvent having a component ratio of isopropyl alcohol: methylethylketone: methylcyclohexane at 25 to 40 wt %: 25 to 40 wt %: 25 to 40 wt % is distilled at a column top temperature of around 74°C;

(ii) In the case of a system of methylethylketone, n-propyl acetate, isopropyl alcohol, and propylene glycol monomethylether, a mixed solvent having a component ratio of isopropyl alcohol: methylethylketone at 25 to 45 wt %:55 to 75 wt % is distilled at a column top temperature of around 75.5°C;

(iii) In the case of a system of n-propyl acetate, isopropyl alcohol and propylene glycol monomethylether, a mixed solvent having a component ratio of isopropyl alcohol: n-propyl acetate at 80 to 95 wt %:5 to 20 wt % is distilled at a column top temperature of around 76°C;

(iv) In the case of a system of methylethylketone, n-propyl acetate and propylene glycol monomethylether, methylethylketone solvent is distilled at a column top temperature of around 80°C;

(v) In the case of a system of n-propyl acetate and propylene glycol monomethylether, n-propyl acetate solvent is distilled and recovered at a column top temperature of around 102°C; and

(vi) If propylene glycol monomethylether is contained in the system, propylene glycol monomethylether remains in the distillation still and recovered from it.

The composition of the azeotropic mixture varies according to the condition of the multi-stage distillation. If the composition of the azeotropic mixture is unknown, the method according to the present invention may include a step of analyzing the composition. The analytical method will be described below. If the composition is determined by compositional analysis and if separation of recovered solvents at a stabilized composition is possible, the mixed solvent in the same composition can be recycled as a raw material for printing ink composition and dilution solvents, without intensive compositional analysis in the following and later operations.

For example, when a mixed solvent containing methylethylketone, n-propyl acetate, and isopropyl alcohol at any ratio is desirably obtained, the mixed solvent obtained in (ii) may be mixed with the methylethylketone and n-propyl acetate obtained in (iv) and (V).

The analytical method is preferably a simple and easy, but accurate measurement method. Examples of the methods include gas chromatography, liquid chromatography, infrared absorptionspectrometry, refractive index measurement, density measurement, conductivity measurement, and odor measurement.

In gas chromatography, a composition can be determined by measuring a recovered solvent sample and identifying the materials from the retention times and determining the amount thereof from the area ratios. The detector may be selected, for example, from TCD (thermal conductivity detector), FID (hydrogen flame ionization detector), according to desired accuracy. It is preferable that a calibration curve is formed before measurement and an internal standard substance is used.

Liquid chromatography is also carried out similarly to the gas chromatography by measuring a recovered solvent sample and determining the composition based on the area ratios on the chart obtained.

The infrared absorption spectrometry may be performed by a method of placing a sample in an isolated cell or a method of using a flow cell installed in the piping of the recovered solvents. The composition can be calculated, based on the area ratios and light permeability (heights) of particular absorption band on the chart obtained. In the case of this method, absorption bands specific to the characteristic bonds of the solvents should be identified previously, and, for example, the area ratio of the absorptions corresponding to ester bond C-O stretching vibration and hydroxyl group O-H stretching vibration are determined from the chart and the composition is determined. It is preferable that a calibration curve is formed before measurement and an internal standard substance is used.

The refractive index measurement is a method of using the fact that a solvent has a refractive index specific to its chemical structure. Generally, D ray (Na flame, wavelength: 589 nm) is used as the light source for measurement, but a method of using sunlight or a method of measuring absorbance by using light sources emitting lights different in wavelength and calculating the composition from the specific dispersion may be used instead. It is preferable that a calibration curve is formed before measurement.

The density measurement can be used for analysis of components, because each solvent component has a particular value. Examples of the measuring methods include buoy method, hydrostatic balance method, and picnometric method, and the result is expressed by a numerical value such as specific density, AIP degree, or Baume degree. It is preferable that a calibration curve is formed before measurement.

The conductivity measurement is a method using the fact that a solvent has a characteristic conductivity due to its chemical structure. In particular, an aqueous system may be used favorably, because water has high conductivity. It is preferable that a calibration curve is formed before measurement.

The nuclear magnetic resonance absorption method gives various patterns due to the chemical structure of the analyte. Even the same C-H bond gives a signal different in chemical shift when it is present in different environment, and thus, a structurally characteristic bond of solvent is first identified, and it is possible to determine the amount of the solvent quantitatively by using the signal strength thereof at a particular chemical shift. Generally, proton NMR or $C^{13}$NMR, for example, is favorably used in identifying the organic compound by the nuclear magnetic resonance absorption method. It is preferable that a calibration curveisformedbefore measurement.

The odor measurement may be performed organoleptically, for example, by using odor index, but use of a device such as semiconductor gas sensor is more preferable for more rapid and accurate determination of the composition. The vapor quantity has a correlation with the blending ratio under the Raoult's law. It is preferable that a calibration curve is formed before measurement.

When the solvents obtained after recovery of vaporized solvents include two kinds of solvents, one component or a new component may be added to the composition, after analysis of the solvent composition, to give a diluted solvent composition.

The dilute solvent-recoverable and recyclable solvents obtained by the method may be used as an ink composition, a coating material, or a laminate coating material.

EXAMPLES

Hereinafter, the present invention will be described in more detail with reference to specific examples, but it should be understood that the scope of the present invention is not restricted by the following Examples.

In the following Examples 1 to 4, the method of recovering and recycling solvents will be described, by using five kinds of solvent- recoverable and recyclable printing ink compositions containing solvents different in blending rate. In the Examples below, part means wt part and % means wt %; and the component ratio of respective solvents was determined from gas chromatographic areas according to a previously prepared calibration curve.

[Reference Example 1]

Gravure printing was performed by using solvent-recoverable and recyclable printing inks different in resin composition that are dissolved in a solvent composition of isopropyl alcohol/methylethylketone/methylcyclohexane/n-propyl acetate/propylene glycol monomethylether in printing machines, and the solvents were recovered collectively in a recovery device containing activated carbon particles as in fluidized bed and dehydrated by a zeolite separation film, to give a recovered solvent composition (A) in the composition of isopropyl alcohol: methylethylketone: methylcyclohexane: n-propyl acetate: propylene glycol monomethylether at a ratio of 25.0:15.0: 5.0: 50.0: 5.0.

100 g of the recovered solvent composition (A) was placed in an Erlenmeyer flask; a distillation column packed with Raschig rings was connected thereto; and the solvent composition was heated while stirred with a hot stirrer.

Distillation of the recovered solvent composition at a ref lux ratio equivalent to a ref lux (Erlenmeyer flask): discharge (recovered solvent composition) rate of 3:1 gave 16.0 g of a mixed solvent (a) of isopropyl alcohol: methylethylketone: methylcyclohexane at a rate of 31.3:37.0:31.7 (by weight) at a column top temperature of 74°C, 13.9 g of a mixed solvent (b) of isopropyl alcohol: methylethylketone at a rate of 34.3:65.7 (by weight) at a column top temperature of 75.5°C, then 16.9 g of a mixed solvent (c) of isopropyl alcohol: n-propyl acetate  at a rate of 89.2:10.8 (by weight) at a column top temperature of 80.5°C, and 48.2 g of n-propyl acetate solvent (d) at a column top temperature of 101°C.

The composionally-defined azeotropic mixed solvents (a) to (c), the single solvent (d), the single solvent of propylene glycol monomethylether remaining in the Erlenmeyer flask (e) thus obtained were recycled as raw materials for a printing ink composition and dilution solvents.

[Reference Example 2]

A mixed solvent composition (B) was prepared by adding 40 parts of methylethylketone (X) to 100 parts of the recovered solvent composition (A) in Example 1.

100 g of the mixed solvent composition (B) was placed in an Erlenmeyer flask; a distillation column packed with Raschig rings was connected thereto; and the solvent composition was heated while stirred with a hot stirrer.

Distillation of the recovered solvent composition at a reflux ratio equivalent to a reflux (Erlenmeyer flask): discharge (recovered solvent composition) rate of 3:1 gave 16.0 g of a mixed solvent (a) of isopropyl alcohol: methylethylketone: methylcyclohexane at a rate of 31.3:37.0:31.7 (by weight) at a column top temperature of 74°C, then, 58. 0 g of a mixed solvent (b) of isopropyl alcohol: methylethylketone at a rate of  34.3:65.7 (by weight) at a column top temperature of 75.5°C, additionally methylethylketone solvent (f) at a column top temperature of 78°C, and 48.2 g of n-propyl acetate solvent (d) at a column top temperature of 101°C.

The composionally-defined azeotropic mixed solvents (a) and (b), the single solvents (d) and (f), and the propylene glycol monomethylether mixed solvent remaining in the Erlenmeyer flask (e) thus obtained were recycled as raw materials for the printing ink composition and dilution solvents. The methylethylketone solvent (f) was recycled in the next distillation also as (X)

[Reference Example 3]

Gravure printing was performed by using solvent-recoverable and recyclable printing inks different in resin composition that are dissolved in a mixed solvent composition of isopropyl alcohol/methylethylketone/methylcyclohexane/n-propyl acetate/propylene glycol monomethylether in more than one printing machines, and the solvents were recovered collectively in a recovery device containing activated carbon particles as in fluidized bed and dehydrated by a zeolite separation film, to give a recovered solvent composition (A) in the composition of isopropyl alcohol: methylethylketone: methylcyclohexane: n-propyl acetate: propylene glycol monomethylether at a ratio of 25.0:15.0: 5.0: 50.0: 5.0 (by weight).

100 g of the recovered solvent composition (A) was placed in an Erlenmeyer flask; a distillation column packed with Raschig rings was connected thereto; and the solvent composition was heated while stirred with a hot stirrer.

Distillation of the recovered solvent composition at a reflux ratio equivalent to a reflux (Erlenmeyer flask) : discharge (recovered solvent composition) rate of 3:1 gave 16.0 g of a mixed solvent (a) of isopropyl alcohol: methylethylketone: methylcyclohexane at a rate of 31.3:37.0:31.7 (by weight) at a column top temperature 74°C, 13.9 g of a mixed solvent (b) of isopropyl alcohol: methylethylketone at a rate of 34.3:65.7 (by weight) then at a column top temperature of 75.5°C, 16.9 g of a mixed solvent (c) of isopropyl alcohol: n-propyl acetate at a rate of 89.2:10.8 (by weight) at a column top temperature of 80.5°C, and 48.2 g of n-propyl acetate solvent (d) at a column top temperature of 101°C.

The composionally-defined azeotropic mixed solvents (a) to (c), the single solvent (d), and 4.2 g of propylene glycol monomethylether solvent remaining in the Erlenmeyer flask (e) thus obtained were recycled as raw materials for the printing ink composition and dilution solvents.

Specifically, 100 parts of the recovered mixed solvent (c) and 256.8 parts of the recovered mixed solvent (d) obtained in Example 3 were mixed, to give the n-propyl acetate/isopropanol mixed solvent (weight ratio: 75/25) described below in Example  10, which was used as the raw material for inks (B1) and (B3). Other mixed solvents were also recycled as they were blended with other mixed solvent or an unused solvent.

[Reference Example 4]

A mixed solvent composition (B) was prepared by adding 40 pats of methylethylketone (X) to 100 parts of the recovered solvent composition (A) in Example 1. 140 g of the mixed solvent composition (B) was placed in an Erlenmeyer flask; a distillation column packed with Raschig rings was connected thereto; and the solvent composition was heated while stirred with a hot stirrer.

Distillation of the recovered solvent composition at a refluxratio equivalent to are flux (Erlenmeyer flask): discharge (recovered solvent composition) rate of 3:1 gave 16.0 g of a mixed solvent (a) of isopropyl alcohol: methylethylketone: methylcyclohexane at a rate of 31.3:37.0:31.7 (by weight) at a column top temperature of 74°C, then, 58. 0 g of a mixed solvent (b) of isopropyl alcohol: methylethylketone at a rate of 34.3:65.7 (by weight) at a column top temperature of 75.5°C, additionally, 10 g of methylethylketone solvent (f) at a column top temperature of 78°C, and 48.2 g of n-propyl acetate solvent (d) at a column top temperature of 101°C.

The composionally-defined azeotropic mixed solvents (a) and (b), the single solvents (d) and (f), and 4.3 g of the mixed propylene glycol monomethylether solvent remaining in the  Erlenmeyer flask (e) thus obtained were recycled as raw materials for the printing ink composition and dilution solvents.

The methylethylketone solvent (f) was recycled in the next distillation also as (X).

Hereinafter in the following Examples 5 to 8, the recovered solvent from the solvent-recoverable and recyclable printing ink containing two kinds of solvents will be analyzed by various analytical methods, and the method of recycling the solvents will be described.

[Reference Example 5]

Gravure printing was performed by using a solvent-recoverable and recyclable printing ink containing nonvolatile solvents in the composition of ethyl acetate/isopropyl alcohol at a rate of 65/35, and the vaporized solvent components were recovered in a recovery device containing activated carbon particles as in fluidized bed and dehydrated by a zeolite separation film, to give a recovered mixed solvent (A) of ethyl acetate/isopropyl alcohol. 5 $\mu$l of the recovered solvent (A) was analyzed in a gas chromatograph "GC-8A" manufactured by Shimadzu Corporation equipped with a TCD detector and a glass column, showing a chromatogram peak area ratio of ethyl acetate/isopropyl alcohol at 189105: 92196. The component ratio of ethyl acetate/isopropyl alcohol in the recovered solvent (A) was calculated to be 70/30 from a calibration curve previously prepared, and thus, isopropyl alcohol was added to the recovered solvent (A) to an ethyl acetate/isopropyl alcohol ratio of 65/35,  and the mixture was recycled as the raw material for the printing ink.

[Reference Example 6]

1 g of butanol was added to 10 g of the recovered solvent (A) obtained in Example 5 as internal standard, to give a sample (B); 150 $\mu$l of the sample (B) was analyzed with a liquid chromatograph equipped with a refractive index detector "RI-101" manufactured by Shoko Co., Ltd. and four liquid chromatography columns "LF-804" manufactured by Shoko Co., Ltd., to show the peaks derived from ethyl acetate, isopropyl alcohol, and butanol. The ratio of ethyl acetate/ isopropyl alcohol in sample (B), as calculated from calibration curves previously formed for ethyl acetate and isopropyl alcohol, was 70/30. Thus, isopropyl alcohol was added to the recovered solvent (A), to an ethyl acetate/isopropyl alcohol ratio of 65/35, and the mixture was recycled as the raw material for the printing ink.

[Reference Example 7]

An FT-IR spectrum of the recovered solvent (A) obtained in Example 5 was obtained by measurement by using an infrared spectrophotometer "JIR-WINSPEC 50" manufactured by JEOL. The absorption band at 1735 cm$^{-1}$, which was assigned to C=O stretching vibration of the ester bond in ethyl acetate, and the broad absorption band at approximately 3450 cm$^{-1}$, which was assigned to O-H stretching vibration of the hydroxyl group in isopropyl alcohol, were determined, and the transmission ratio thereof was 40.53/32.14. The ratio of ethyl acetate to isopropyl alcohol in the recovered solvent (A), ethyl acetate/isopropyl alcohol, as determined based on a previously prepared calibration curve, was 70/30. Thus, isopropyl alcohol was added to the recovered solvent (A) to an ethyl acetate/isopropyl alcohol ratio of 65/35, and the mixture was recycled as the raw material for the printing ink.

[Reference Example 8]

The specific density of the recovered solvent (A) obtained in Example 5, as determined in a 100-ml weighing bottle, was 8.412 (25°C). The ratio of ethyl acetate to isopropyl alcohol in the recovered solvent (A), ethyl acetate/ isopropyl alcohol as determined based on a calibration curve previously prepared, was 70/30. Thus, isopropyl alcohol was added to the recovered solvent (A) to an ethyl acetate/isopropyl alcohol ratio of 65/35, and the mixture was recycled as the raw material for the printing ink.

Hereinafter in Examples 9 to 23, ink compositions containing two or three kinds of solvents were prepared, and the superiority thereof in printability to the ink compositions of Comparative Examples 1 and 2 will be described. In the following Examples and Comparative Examples, part and % mean wt parts and wt %, respectively. The amount of hydroxyl group is determined in conformity with JIS K0070 in terms of the amount of potassium hydroxide (mg) required to neutralize the hydroxyl groups in 1 g of a resin. The amine value is the amount of potassium hydroxide (mg) equivalent to that of hydrochloric acid needed to neutralize the amino groups in 1 g of resin. The amine value was determined by the method described below. The molecular weight and the molecular weight distribution as polystyrene were determined by GPC (gel-permeation chromatography) in terms of molecular weight of polystyrene. The amine value was determined in the following manner:

[Determination of amine value]

0.5 to 2 g of a sample is weighed accurately (sample quantity: S g). 30 ml of neutral ethanol (BDG neutral) was added to the weighed sample for solubilization. The solution obtained was titrated with 0.2 mol/liter ethanolic hydrochloric acid solution (titer: f). At the end point, the solution turns from green to yellow in color, the titer then is A ml. The amine value was calculated according to the following Formula (Formula 1):

$$\text{(Formula 1)} \quad \text{Amine value} = (A \times f \times 0.2 \times 56.108)/S$$

[Example 9]

54.719 parts of a polyester diol having a number- average molecular weight of 2000 obtained from adipic acid and 2- butyl- 2- ethylpropanediol, 3.989 parts of isophorone diisocyanate, 0.010 part of stannous 2- ethylhexanoate and 10.0 parts of n- propyl acetate were allowed to react under nitrogen stream at 85°C for 3 hours; 10.0 parts of n- propyl acetate was added thereto; and the mixture was cooled, to give 78.718 parts of a solvent solution of a terminal isocyanate prepolymer. Then, 78.718 parts of the solvent solution of a terminal isocyanate prepolymer obtained was gradually added to a mixture of 1.031 parts of isophoronediamine, 0.261 part of di- n- butylamine, 30.4 parts of n- propyl acetate and 19.6 parts of isopropyl alcohol at room temperature; the mixture was then allowed to react at 50°C for 1 hour, to give a polyurethane resin solution (A) having a solid content of 30% and containing a polymer having a weight- average molecular weight of 60, 000 and an amine value of 3.0 mg- KOH/g- resin.

30 parts of Titanix JR- 805 (manufactured by Tayca Corporation), 10 parts of polyurethane resin solution (A), and 10.0 parts of an n- propyl acetate/ isopropyl alcohol mixture solution (weight ratio: 72/28) were mixed under agitation and kneaded in a sand mill; and 40 parts of the polyurethane resin solution (A) and 10.0 parts of an n- propyl acetate/ isopropyl alcohol mixture solution (weight ratio: 72/28) were mixed with it, to give a white printing ink (A1) . 50 parts of an n- propyl acetate/ isopropyl alcohol mixture solution (weight ratio: 72/28) was added as dilution solvent to 100 parts of the white printing ink (A1) and was mixed, to give a white diluted ink (A2) .

12 parts of copper phthalocyanine blue, 20 parts of the polyurethane resin solution (A) and 10 parts of an n- propyl acetate/ isopropyl alcohol mixture solution (weight ratio: 72/28) were mixed under agitation and kneaded in a sand mill; and 20 parts of the polyurethane resin solution (A) and 38 parts of an n- propyl acetate/ isopropyl alcohol mixture solution (weight ratio: 72/28) was added thereto, to give a blue printing ink (A3) . 50 parts of an n- propyl acetate/ isopropyl alcohol mixture solution (weight ratio: 72/28) was added as dilution solvent to 100 parts of the blue printing ink (A3) obtained and was mixed, to give a blue diluted ink (A4) . The solvent composition of each of the diluted inks thus obtainedwas n- propyl acetate/ isopropyl alcohol at 72: 28.

[Example 10]

78.718 parts of a solvent solution of a terminal isocyanate prepolymer was prepared similarly to Example 9. Then, 78.718 parts of the solvent solution of a terminal isocyanate prepolymer obtained was gradually added to a mixture of 1.031 parts of isophoronediamine, 0.261 part of di- n- butylamine, 32.5 parts of n- propyl acetate and 17.5 parts of isopropyl alcohol at room temperature; and the mixture was allowed to react at 50°C for 1 hour, to give a polyurethane resin solution (B) having a solid content of 30% and containing a polymer having a weight- average molecular weight of 60, 000 and an amine value of 3.0 mg- KOH/g- resin.

30 parts of Titanix JR- 805 (manufactured by Tayca Corporation), 10 parts of the polyurethane resin solution (B), and 10.0 parts of an n- propyl acetate/ isopropyl alcohol mixture solution (weight ratio: 75/25) were mixed under agitation and kneaded in a sand mill; and 40 parts of the polyurethane resin solution (B) and 10.0 parts of an n- propyl acetate/ isopropyl alcohol mixture solution (weight ratio: 75/25) were mixed with it, to give a white printing ink (B1) . 50 parts of an n- propyl acetate/ isopropyl alcohol mixture solution (weight ratio: 75/25) was added as dilution solvent to the 100 parts of the white printing ink (B1) obtained and was mixed, to give a white diluted ink (B2) .

12 parts of copper phthalocyanine blue, 20 parts of the polyurethane resin solution (B), and 10 parts of an n- propyl acetate/ isopropyl alcohol mixture solution (weight ratio: 75/25) were mixed under agitation and kneaded in a sand mill; and 20 parts of the polyurethane resin solution (B) and 38 parts of an n- propyl acetate/ isopropyl alcohol mixture solution (weight ratio: 75/25) were mixed with it, to give a blue printing ink (B3) . 50 parts of an n- propyl acetate/ isopropyl alcohol mixture solution (weight ratio: 75/25) was added as dilution solvent to 100 parts of the blue printing ink (B3) obtained and was mixed, to give a blue diluted ink (B4) .
The solvent composition of each of the diluted inks thus obtained was n- propyl acetate/ isopropyl alcohol at 75: 25.

[Example 11]

78.718 parts of a solvent solution of a terminal isocyanate prepolymer was prepared similarly to Example 9. Then, 78.718 parts of the solvent solution containing a terminal isocyanate prepolymer obtained was gradually added to a mixture of 1.031 parts of isophoronediamine, 0.261 part of di- n- butylamine, 38.1 part of n- propyl acetate and 11.9 parts of isopropyl alcohol at room temperature; the mixture was then allowed to react at 50°C for 1 hour, to give a polyurethane resin solution (C) having a solid content of 30% and containing a polymer having a weight- average molecular weight of 60, 000 and an amine value of 3.0 mg- KOH/g- resin.
30 parts of Titanix JR- 805 (manufactured by Tayca Corporation), 10 parts of the polyurethane resin solution (C), and 10.0 parts of an n- propyl acetate/ isopropyl alcohol mixture solution (weight ratio: 83/17) were mixed under agitation and kneaded in a sand mill; and 40 parts of the polyurethane resin varnish and 10.0 parts of an n- propyl acetate/ isopropyl alcohol mixture solution (weight ratio: 83/17) were added thereto, to give a white printing ink (C1) . 50 parts of an n- propyl acetate/ isopropyl alcohol mixture solution (weight ratio: 83/17) was added as dilution solvent to 100 parts of the white printing ink (C1) obtained and was mixed, to give a white diluted ink (C2) .
12 parts of copper phthalocyanine blue, 20 parts of the polyurethane resin solution (C), and 10 parts of an n- propyl acetate/ isopropyl alcohol mixture solution (weight ratio: 83/17) were mixed under agitation and kneaded in a sand mill; and 20 parts of the polyurethane resin solution (C) and 38 parts of an n- propyl acetate/ isopropyl alcohol mixture solution (weight ratio: 83/17) were mixed with it, to give a blue printing ink (C3) . 50 parts of an n- propyl acetate/ isopropyl alcohol mixture solution (weight ratio: 83/17) was added as dilution solvent to 100 parts of the blue printing ink (C3) obtained and was mixed, to give a blue diluted ink (C4) . The solvent composition of each of the diluted inks thus obtainedwas n- propyl acetate/ isopropyl alcohol at 83: 17.

[Reference Example 12]

78.718 parts of a solvent solution of a terminal isocyanate prepolymer was prepared similarly to Example 9. Then, 78.718 parts of the solvent solution of a terminal isocyanate prepolymer obtained was gradually added to a mixture of 1.031 parts of isophoronediamine, 0.261 part of di- n- butylamine, 23.1 parts of n- propyl acetate and 33. 6 parts of isopropyl alcohol at room temperature gradually; and the mixture was then allowed to react at 50°C for 1 hour, to give a polyurethane resin solution (D) having a solid content of 30% and containing a polymer having a weight- average molecular weight of 60, 000 and an amine value of 3.0 mg- KOH/g- resin. 30 parts of Titanix JR- 805 (manufactured by Tayca Corporation), 10 parts of the polyurethane resin solution (D), and 10. 0 parts of an n- propyl acetate/ isopropyl alcohol mixture solution (weight ratio: 52/48) were mixed under agitation and kneaded in a sand mill; and 40 parts of the polyurethane resin solution (D) and 10.0 parts of an n- propyl acetate/ isopropyl alcohol mixture solution (weight ratio: 52/48) were mixed with it, to give a white printing ink (D1) . 50 parts of an n- propyl acetate/ isopropyl alcohol mixture solution (weight ratio: 52/48) was added as dilution solvent to 100 parts of the white printing ink (D1) obtained and was mixed, to give a white diluted ink (D2) .
12 parts of copper phthalocyanine blue, 20 parts of the polyurethane resin solution (D), and 10 parts of an n- propyl acetate/ isopropyl alcohol mixture solution (weight ratio: 52/48) were mixed under agitation and kneaded in a sand mill; and 20 parts of the polyurethane resin solution (D) and 38 parts of an n- propyl acetate/ isopropyl alcohol mixture solution (weight ratio: 52/48) were mixed with it, to give a blue printing ink (D3) . 50 parts of an n- propyl acetate/ isopropyl alcohol mixture solution (weight ratio: 52/48) was added as dilution solvent to 100 parts of the blue printing ink (D3) obtained and was mixed, to give a blue diluted ink (d4) . The solvent composition of each of the diluted inks thus obtained was n- propyl acetate/ isopropyl alcohol at 52: 48.

[Reference Example 13]

78.718 parts of a solvent solution of a terminal isocyanate prepolymer was prepared similarly to Example 9. Then, 78.718 parts of the solvent solution containing a terminal isocyanate prepolymer obtained was gradually added to a mixture of 1.031 parts of isophoronediamine, 0. 261 part of di- n- butylamine, 22. 6 parts of n- propyl acetate and 8.4 parts of isopropyl alcohol at room temperature; and the mixture was allowed to react at 50°C for 1 hour, to give a polyurethane resin solution (E) having a solid content of 30% and containing a polymer having a weight- average molecular weight of 55, 000 and an amine value of 3.0 mg- KOH/g- resin.

30 parts of Titanix JR- 805 (manufactured by Tayca Corporation), 10 parts of the polyurethane resin solution (E), and 10.0 parts of an n- propyl acetate/ isopropyl alcohol mixture solution (weight ratio: 88/12) were mixed under agitation and kneaded in a sand mill; and 40 parts of the polyurethane resin solution (E) and 10.0 parts of an n- propyl acetate/ isopropyl alcohol mixture solution (weight ratio: 88/12) were mixed with it, to give a white printing ink (E1) . 50 parts of an n- propyl acetate/ isopropyl alcohol mixture solution (weight ratio: 88/12) was added as dilution solvent to 100 parts of the white printing ink (E1) obtained and was mixed, to give a white diluted ink (E2) .

12 parts of copper phthalocyanine blue, 20 parts of the polyurethane resin solution (E), and 10 parts of an n- propyl acetate/ isopropyl alcohol mixture solution (weight ratio: 88/12) were mixed under agitation and kneaded in a sand mill; and 20 parts of the polyurethane resin solution (E) and 38 parts of an n- propyl acetate/ isopropyl alcohol mixture solution (weight ratio: 88/12) were mixed with it, to give a blue printing ink (E3) . 50 parts of an n- propyl acetate/ isopropyl alcohol mixture solution (weight ratio: 88/12) was added as dilution solvent to 100 parts of the blue printing ink (E3) obtained and was mixed, to give a blue diluted ink (E4) . The solvent composition of each of the diluted inks thus obtainedwas n- propyl acetate/ isopropyl alcohol at 88: 12.

[Reference Example 14]

78.718 parts of a solvent solution of a terminal isocyanate prepolymer was prepared similarly to Example 9. Then, 78.718 parts of the solvent solution containing a terminal isocyanate prepolymer obtained was gradually added to a mixture of 1.031 parts of isophoronediamine, 0.261 part of di- n- butylamine, 8.0 parts of n- propyl acetate and 42.0 parts of isopropyl alcohol at room temperature; and the mixture was then allowed to react at 50°C for 1 hour, to give a polyurethane resin solution (F) having a solid content of 30% and containing a polymer having a weight- average molecular weight of 60, 000 and an amine value of 3.0 mg- KOH/g- resin.

30 parts of Titanix JR- 805 (manufactured by Tayca Corporation), 10 parts of the polyurethane resin solution (F), and 10. 0 parts of an n- propyl acetate/ isopropyl alcohol mixture solution (weight ratio: 40/60) were mixed under agitation and kneaded in a sand mill; and 40 parts of the polyurethane resin solution (F) and 10.0 parts of an n- propyl acetate/ isopropyl alcohol mixture solution (weight ratio: 40/60) were mixed with it, to give a white printing ink (F1) . 50 parts of an n- propyl acetate/ isopropyl alcohol mixture solution (weight ratio: 40/60) was added as dilution solvent to 100 parts of the white printing ink (F1) obtained and was mixed, to give a white diluted ink (F2) .

12 parts of copper phthalocyanine blue, 20 parts of the polyurethane resin solution (F), and 10 parts of an n- propyl acetate/ isopropyl alcohol mixture solution (weight ratio: 40/60) were mixed under agitation and kneaded in a sand mill; and 20 parts of the polyurethane resin solution (F) and 38 parts of an n- propyl acetate/ isopropyl alcohol mixture solution (weight ratio: 40/60) were mixed with it, to give a blue printing ink (F3) . 50 parts of an n- propyl acetate/ isopropyl alcohol mixture solution (weight ratio: 40/60) was added as dilution solvent to 100 parts of the blue printing ink (F3) obtained and was mixed, to give a blue diluted ink (F4) . The solvent composition of each of the diluted inks thus obtainedwas n- propyl acetate/ isopropyl alcohol at 40: 60.

[Reference Example 15]

78. 718 parts of a solvent solution of a terminal isocyanate prepolymer was prepared similarly to Example 9. Then, 78.718 parts of the solvent solution containing a terminal isocyanate prepolymer obtained was gradually added to a mixture of 1.031 parts of isophoronediamine, 0.261 part of di- n- butylamine, 46.5 parts of n- propyl acetate and 3.5 parts of isopropyl alcohol at room temperature; and the mixture was allowed to react at 50°C for 1 hour, to give a polyurethane resin solution (G) having a solid content of 30% and containing a polymer having a weight- average molecular weight of 60, 000 and an amine value of 3.0 mg- KOH/g- resin.

30 parts of Titanix JR- 805 (manufactured by Tayca Corporation), 10 parts of the polyurethane resin solution (G), and 10.0 parts of an n- propyl acetate/ isopropyl alcohol mixture solution (weight ratio: 95/5) were mixed under agitation and kneaded in a sand mill; and 40 parts of the polyurethane resin solution (G) and 10.0 parts of an n- propyl acetate/ isopropyl alcohol mixture solution (weight ratio: 95/5) were mixed with it, to give a white printing ink (G1) . 50 parts of an n- propyl acetate/ isopropyl alcohol mixture solution (weight ratio: 95/5) was added as dilution solvent to 100 parts of the white printing ink (G1) obtained and was mixed, to give a white diluted ink (G2) .

12 parts of copper phthalocyanine blue, 20 parts of the polyurethane resin solution (G), and 10 parts of an n- propyl acetate/ isopropyl alcohol mixture solution (weight ratio: 95/5) were mixed under agitation and kneaded in a sand mill; and 20 parts of the polyurethane resin solution (G) and 38 parts of an n- propyl acetate/ isopropyl alcohol mixture solution (weight ratio: 95/5) were mixed with it, to give a blue printing ink (G3) . 50 parts of an n- propyl acetate/ isopropyl alcohol mixture solution (weight ratio: 95/5) was added as dilution solvent to 100 parts of the blue printing ink (G3) obtained and was mixed, to give a blue diluted ink (G4) . The solvent composition of each of the diluted inks thus obtained was n- propyl acetate/ isopropyl alcohol at 95: 5.

[Reference Example 16]

54.719 parts of a polyester diol obtained from adipic acid and 2- butyl- 2- ethylpropanediol having a number- average molecular weight of 2000, 3. 989parts of isophoronediisocyanate, 0.010 part of stannous 2- ethylhexanoate and 10.0 parts of ethyl acetate were allowed to react under nitrogen stream at 85°C for 3 hours; after addition of 10. 0 parts of ethyl acetate, the mixture was cooled, to give 78.718 parts of a terminal isocyanate  prepolymer solvent solution. Then, 78. 718 parts of the terminal isocyanate prepolymer solvent solution obtained was gradually added to a mixture of 1.031 parts of isophoronediamine, 0.261 part of di- n- butylamine, 16.4 parts of ethyl acetate and 33.6 parts of isopropyl alcohol at room temperature; and the mixture was allowed to react at 50°C for 1 hour, to give a polyurethane resin solution (H) having a solid content of 30% and containing a polymer having a weight- average molecular weight of 60, 000 and an amine value of 3.0 mg- KOH/g- resin.

30 parts of Titanix JR- 805 (manufactured by Tayca Corporation), 10 parts of the polyurethane resin solution (H), and 10.0 parts of an ethyl acetate/ isopropyl alcohol mixture solution (weight ratio: 52/48) were mixed under agitation and kneaded in a sand mill; and 40 parts of the polyurethane resin solution and 10.0 parts of an ethyl acetate/ isopropyl alcohol mixture solution (weight ratio: 52/48) were mixed with it, to give a white printing ink (H1) . 50 parts of an ethyl acetate/ isopropyl alcohol mixture solution (weight ratio: 52/48) was added as dilution solvent to 100 parts of the white printing ink (H1) obtained and was mixed, to give a white diluted ink (H2) .

12 parts of copper phthalocyanine blue, 20 parts of the polyurethane resin solution (H), and 10 parts of an ethyl acetate/ isopropyl alcohol mixture solution (weight ratio: 52/48) were mixed under agitation and kneaded in a sand mill; and 20 parts of the polyurethane resin solution (H) and 38 parts of an ethyl acetate/ isopropyl alcohol mixture solution (weight ratio: 52/48) were mixed with it, to give a blue printing ink (H3) . 50 parts of an ethyl acetate/ isopropyl alcohol mixture solution (weight ratio: 52/48) was added as dilution solvent to 100 parts of the blue printing ink (H3) obtained and was mixed, to give a blue diluted ink (H4) . The solvent composition of each of the diluted inks thus obtained was ethyl acetate/ isopropyl alcohol at 52: 48.

[Reference Example 17]

78.718 parts of a terminal isocyanate prepolymer solvent solution was obtained similarly to Example 16. Then, 78.718 parts of the terminal isocyanate prepolymer solvent solution obtained was gradually added to a mixture of 1.031 parts of isophoronediamine, 0.261 part of di- n- butylamine, 8.0 parts of ethyl acetate and 42.0 parts of isopropyl alcohol at room temperature; and the mixture was allowed then to react at 50°C for 1 hour, to give a polyurethane resin solution (I) having a solid content of 30% and containing a polymer having a weight- average molecular weight of 60, 000 and an amine value of 3.0 mg- KOH/g- resin.

30 parts of Titanix JR- 805 (manufactured by Tayca Corporation), 10 parts of the polyurethane resin solution (I) and 10.0 parts of an ethyl acetate/ isopropyl alcohol mixture solution (weight ratio: 40/60) were mixed under agitation and kneaded in a sand mill; and 40 parts of the polyurethane resin solution (I) and 10.0 parts of an ethyl acetate/ isopropyl alcohol mixture solution (weight ratio: 40/60) were mixed with it, to  give a white printing ink (I1) . 50 parts of an ethyl acetate/ isopropyl alcohol mixture solution (weight ratio: 40/60) was added as dilution solvent to 100 parts of the white printing ink (I1) obtained and was mixed, to give a white diluted ink (I2) .

12 parts of copper phthalocyanine blue, 20 parts of the polyurethane resin solution (I), and 10 parts of an ethyl acetate/ isopropyl alcohol mixture solution (weight ratio: 40/60) were mixed under agitation and kneaded in a sand mill; and 20 parts of the polyurethane resin solution (I) and 38 parts of an ethyl acetate/ isopropyl alcohol mixture solution (weight ratio: 40/60) were mixed with it, to give a blue printing ink (I3) . 50 parts of an ethyl acetate/ isopropyl alcohol mixture solution (weight ratio: 40/60) was added as dilution solvent to 100 parts of the blue printing ink (I3) obtained and was mixed, to give a blue diluted ink (I4) .

The solvent composition of each of the diluted inks thus obtained was ethyl acetate/ isopropyl alcohol at 40: 60.

[Reference Example 18]

78.718 parts of a terminal isocyanate prepolymer solvent solution was obtained similarly to Example 16. Then, 78.718 parts of the terminal isocyanate prepolymer solvent solution obtained was gradually added to a mixture of 1.031 parts of isophoronediamine, 0.261 part of di- n- butylamine, 5.4 parts of ethyl acetate and 54.6 parts of n- propyl alcohol at room temperature; and the mixture was allowed to react at 50°C for 1 hour, to give a polyurethane resin solution (J) having a solid content of 30% and containing a polymer having a weight- average molecular weight of 55, 000, an amine value of 3.0 mg- KOH/g- resin, and a viscosity at 25°C of 600 mPa·S.

30 parts of Titanix JR- 805 (manufactured by Tayca Corporation), 10 parts of the polyurethane resin solution (J), and 10.0 parts of an ethyl acetate/n- propyl alcohol mixture solution (weight ratio: 22/78) were mixed under agitation and kneaded in a sand mill; and 40 parts of the polyurethane resin solution (J) and 10.0 parts of an ethyl acetate/n- propyl alcohol mixture solution (weight ratio: 22/78) were mixed with it, to give a white printing ink (J1). 50 parts of an ethyl acetate/n- propyl alcohol mixture solution (weight ratio: 22/78) was added as dilution solvent to 100 parts of the white printing ink (J1) obtained and was mixed, to give a white diluted ink (J2).

12 parts of copper phthalocyanine blue, 20 parts of the polyurethane resin solution, and 10 parts of an ethyl acetate/n-propyl alcohol mixture solution (weight ratio: 22/78) were mixed under agitation and kneaded in a sand mill; and 20 parts of the polyurethane resin solution (J) and 38 parts of an ethyl acetate/n- propyl alcohol mixture solution (weight ratio: 22/78) were mixed with it, to give a blue printing ink (J3). 50 parts of an ethyl acetate/n- propyl alcohol mixture solution (weight ratio: 22/78) was added as dilution solvent to 100 parts of the blue printing ink (BJ) obtained and was mixed, to give a blue diluted ink (J4).

The solvent composition of each of the diluted inks thus obtained was ethyl acetate/n- propyl alcohol at 22: 78.

[Reference Example 19]

78.718 parts of a terminal isocyanate prepolymer solvent solution was obtained similarly to Example 16. Then, 78.718 parts of the terminal isocyanate prepolymer solvent solution obtained was gradually added to a mixture of 1.031 parts of isophoronediamine, 0.261 part of di- n- butylamine, 32.5 parts of ethyl acetate and 17.5 parts of isopropyl alcohol at room temperature; and the mixture was allowed to react at 50°C for 1 hour, to give a polyurethane resin solution (K) having a solid content of 30% and containing a polymer having a weight- average molecular weight of 60, 000 and an amine value of 3.0 mg- KOH/g- resin.

30 parts of Titanix JR- 805 (manufactured by Tayca Corporation), 10 parts of the polyurethane resin solution (K), and 10.0 parts of an ethyl acetate/ isopropyl alcohol mixture solution (weight ratio: 75/25) were mixed under agitation and kneaded in a sand mill; and 40 parts of the polyurethane resin solution (K), and 10.0 parts of an ethyl acetate/ isopropyl alcohol mixture solution (weight ratio: 75/25) were mixed with it, to give a white printing ink (K1). 50 parts of an ethyl acetate/ isopropyl alcohol mixture solution (weight ratio: 75/25) was added as dilution solvent to 100 parts of the white printing ink (K1) obtained and was mixed, to give a white diluted ink (K2).

12 parts of copper phthalocyanine blue, 20 parts of the polyurethane resin solution (K), and 10 parts of an ethyl acetate/ isopropyl alcohol mixture solution (weight ratio: 75/25) were mixed under agitation and kneaded in a sand mill; and 20 parts of the polyurethane resin solution (K) and 38 parts of an ethyl acetate/ isopropyl alcohol mixture solution (weight ratio: 75/25) were mixed with it, to give a blue printing ink (K3). 50 parts of an ethyl acetate/ isopropyl alcohol mixture solution (weight ratio: 75/25) was added as dilution solvent to 100 parts of the blue printing ink (K3) obtained, to give a blue diluted ink (K4). The solvent composition of each of the diluted inks thus obtained was ethyl acetate/ isopropyl alcohol at 75: 25.

[Reference Example 20]

54.719 parts of a polyester diol obtained from adipic acid and 2- butyl- 2- ethylpropanediol having a number- average molecular weight of 2000, 3.989 parts of isophorone diisocyanate, 0.010 part of stannous 2- ethylhexanoate and 10.0 parts of isobutyl acetate were allowed to react under nitrogen stream at 85°C for 3 hours; 10.0 parts of isobutyl acetate was added thereto, to give 78. 718 parts of a terminal isocyanate prepolymer solvent solution. Then, 78. 718 parts of the terminal isocyanate prepolymer solvent solution obtained was gradually added to a mixture of 1.031 parts of isophoronediamine, 0.261 part of di- n- butylamine, 32.5 parts of isobutyl acetate and 17.5 parts of isopropyl alcohol at room temperature; and the mixture was allowed to react at 50°C for 1 hour, to give a polyurethane resin solution (L) having a solid content of 30% and containing a polymer having a weight- average molecular weight of 60, 000 and an amine value of 3.0 mg- KOH/g- resin.

30 parts of Titanix JR- 805 (manufactured by Tayca Corporation), 10 parts of the polyurethane resin solution (L) and 10.0 parts of an isobutyl acetate/ isopropyl alcohol mixture solution (weight ratio: 75/25) were mixed under agitation and kneaded in a sand mill; and 40 parts of the polyurethane resin solution (L) and 10.0 parts of an isobutyl acetate/ isopropyl alcohol mixture solution (weight ratio: 75/25) were mixed with it, to give a white printing ink (L1). 50 parts of an isobutyl acetate/ isopropyl alcohol mixture solution (weight ratio: 75/25) was added as dilution solvent to 100 parts of the white printing ink (L1) obtained and was mixed, to give a white diluted ink (L2).

12 parts of copper phthalocyanine blue, 20 parts of the polyurethane resin solution (L) and 10 parts of an isobutyl acetate/ isopropyl alcohol mixture solution (weight ratio: 75/25) were mixed under agitation and kneaded in a sand mill; and 20 parts of the polyurethane resin solution (L) and 38 parts of an isobutyl acetate/ isopropyl alcohol mixture solution (weight ratio: 75/25) were mixed with it, to give a blue printing ink (L3) . 50 parts of an isobutyl acetate/ isopropyl alcohol mixture solution (weight ratio: 75/25) was added as dilution solvent to 100 parts of the blue printing ink (L3) obtained, to give a blue diluted ink (L4) .

The solvent composition of each of the diluted inks thus obtained was isobutyl acetate/ isopropyl alcohol at 75: 25.

[Reference Example 21]

78. 718 parts of a solvent solution of a terminal isocyanate prepolymer was prepared similarly to Example 9. Then, 78.718 parts of the terminal isocyanate prepolymer solvent solution obtained was gradually added to a mixture of 1.031 parts of isophoronediamine, 0.261 part of di- n- butylamine, 32.5 parts of n- propyl acetate and 17.5 parts of n- propyl alcohol at room temperature; the mixture was allowed to react at 50°C for 1 hour, to give a polyurethane resin solution (M) having a solid content of 30% and containing a polymer having a weight- average molecular weight of 60, 000 and an amine value of 3.0 mg- KOH/g- resin.

30 parts of Titanix JR- 805 (manufactured by Tayca Corporation), 10 parts of the polyurethane resin solution (M) and 10.0 parts of an n- propyl acetate/n- propyl alcohol mixture solution (weight ratio: 75/25) were mixed under agitation and kneaded in a sand mill; and 40 parts of the polyurethane resin solution (M) and 10.0 parts of an n- propyl acetate/n- propyl alcohol mixture solution (weight ratio: 75/25) were mixed with it, to give a white printing ink (M1) . 50 parts of an n- propyl acetate/n- propyl alcohol mixture solution (weight ratio: 75/25) was added as dilution solvent to 100 parts of the white printing ink (M1) obtained and was mixed, to give a white diluted ink (M2) .

12 parts of copper phthalocyanine blue, 20 parts of the polyurethane resin solution (M) and 10 parts of an n- propyl acetate/n- propyl alcohol mixture solution (weight ratio: 75/25) were mixed under agitation and kneaded in a sand mill; and 20 parts of the polyurethane resin solution (M) and 38 parts of an n- propyl acetate/n- propyl alcohol mixture solution (weight ratio: 75/25) were mixed with it, to give a blue printing ink (M3) . 50 parts of an n- propyl acetate/n- propyl alcohol mixture solution (weight ratio: 75/25) was added as dilution solvent to 100 parts of the blue printing ink (M3) obtained, to give a blue diluted ink (M4) . The solvent composition of each of the diluted inks thus obtained was n- propyl acetate/n- propyl alcohol at 75: 25.

[Reference Example 22]

78.718 parts of a solvent solution of a terminal isocyanate prepolymer was prepared similarly to Example 9. Then, 78.718 parts of the terminal isocyanate prepolymer solvent solution obtained was gradually added to a mixture of 1.031 parts of isophoronediamine, 0.261 part of di- n- butylamine, 32.5 parts of n- propyl acetate and 17.5 parts of propylene glycol monoethylether at room temperature; and the mixture was allowed to react at 50°C for 1 hour, to give a polyurethane resin solution (N) having a solid content of 30% and containing a polymer having a weight- average molecular weight of 60, 000, an amine value of 3.0 mg- KOH/g- resin, and a viscosity at 25°C of 600 mPa·S.

30 parts of Titanix JR- 805 (manufactured by Tayca Corporation), 10 parts of the polyurethane resin solution (N) and 10.0 parts of an n- propyl acetate/ propylene glycol monoethylether mixture solution (weight ratio: 75/25) weremixed under agitation and kneaded in a sand mill; and 40 parts of the polyurethane resin solution (N) and 10.0 parts of an n- propyl acetate/ propylene glycol monoethylether mixture solution (weight ratio: 75/25) were mixed with it, to give a white printing ink (N1) . 50 parts of an n- propyl acetate/ propylene glycol monoethylether mixture solution (weight ratio: 75/25) was added as dilution solvent to 100 parts of the white printing ink (N1) obtained and was mixed, to give a white diluted ink (N2) .

12 parts of copper phthalocyanine blue, 20 parts of the polyurethane resin solution (N) and 10 parts of an n- propyl acetate/ propylene glycol monoethylether mixture solution (weight ratio: 75/25) were mixed under agitation and kneaded in a sand mill; and 20 parts of the polyurethane resin solution (N) and 38 parts of an n- propyl acetate/ propylene glycol monoethylether mixture solution (weight ratio: 75/25) were mixed with it, to give a blue printing ink (N3) . 50 parts of an n- propyl acetate/ propylene glycol monoethylether mixture solution (weight ratio: 75/25) was added as dilution solvent to 100 parts of the blue printing ink (N3) obtained and was mixed, to give a blue diluted ink (N4) .

The solvent composition of each of the diluted inks thus obtained was n- propyl acetate/ propylene glycol monoethylether at 75: 25.

[Comparative Example 1]

78. 718 parts of a solvent solution of a terminal isocyanate prepolymer was prepared similarly to Example 9. Then, 78.718 parts of the terminal isocyanate prepolymer solvent solution obtained was gradually added to a mixture of 1.031 parts of isophoronediamine, 0.261 part of di- n- butylamine and 50.0 parts of n- propyl acetate at room temperature; and the mixture was allowed to react at 50°C for 1 hour, to give a polyurethane resin solution (O) having a solid content of 30% and containing a polymer having a weight- average molecular weight of 20, 000, an amine value of 3. 0 mg- KOH/g- resin, and a viscosity at 25°C of 600 mPa·S.

30 parts of Titanix JR- 805 (manufactured by Tayca Corporation), 10 parts of the polyurethane resin solution (O) and 10.0 parts of n- propyl acetate were mixed under agitation and kneaded in a sand mill; and 40 parts of the polyurethane resin solution (O) and 10.0 parts of n- propyl acetate were mixed with it, to give a white printing ink (O1) . 50 parts of n- propyl acetate was added as dilution solvent to 100 parts of the white printing ink obtained (O1) and was mixed, to give a white diluted ink (02) .

12 parts of copper phthalocyanine blue, 20 parts of the polyurethane resin solution (O) and 10 parts of n- propyl acetate were mixed under agitation and kneaded in a sand mill; and 20 parts of polyurethane resin solution (O) and 38 parts of n- propyl acetate were mixed with it, to give a blue printing ink (03) . 50 parts of n- propyl acetate was added as dilution solvent to 100 parts of the blue printing ink obtained (03) and was mixed, to give a blue diluted ink (04) .

Thus, the solvent for the diluted ink was n- propyl acetate.

[Comparative Example 2]

54.719 parts of a polyester diol obtained from adipic acid and butylethylpropanediol and having a number- average molecular weight of 2000, 3.989 parts of isophorone diisocyanate, 0.010 part of stannous 2- ethylhexanoate and 10.0 parts of isopropyl alcohol were allowed to react under nitrogen stream at 85°C for 3 hours; and, after addition of 10.0 parts of isopropyl alcohol, the mixture was cooled, to give 78.718 parts of a terminal isocyanate prepolymer solvent solution. Then, 78.718 parts of the terminal isocyanate prepolymer solvent solution obtained was gradually added to a mixture of 1.031 parts of isophoronediamine, 0.261 part of di- n- butylamine and 50.0 parts of isopropyl alcohol at room temperature; and the mixture was allowed to react at 50°C for 1 hour, to give a polyurethane resin solution (P) having a solid content of 30% and containing a polymer having a weight- average molecular weight of 20, 000, an amine value of 3. 0 mg- KOH/g- resin, and a viscosity at 25°C of 600 mPa·S.

30 parts of Titanix JR- 805 (manufactured by Tayca Corporation), 10 parts of the polyurethane resin solution (P) and 10.0 parts of isopropyl alcohol were mixed under agitation and kneaded in a sand mill; and 40 parts of the polyurethane resin solution (P) and 10.0 parts of isopropyl alcohol were mixed with it, to give a white printing ink (P1) . 50 parts of isopropyl alcohol was added as dilution solvent to 100 parts of the white printing ink obtained (P1) and was mixed, to give a white diluted ink (P2) .

12 parts of copper phthalocyanine blue, 20 parts of the polyurethane resin solution (P) and 10 parts of isopropyl alcohol were mixed under agitation and kneaded in a sand mill; and 20 parts of the polyurethane resin solution (P) and 38 parts of isopropyl alcohol were mixed with it, to give a blue printing ink (P3) . 50 parts of isopropyl alcohol was added as dilution solvent to 100 parts of the blue printing ink obtained (P3) and was mixed, to give a blue diluted ink (P4) . Thus, the solvent for the diluted ink was isopropyl alcohol.

[Reference Example 23]

54.719 parts of a polyester diol obtained from adipic acid and butylethylpropanediol and having a number- average molecular weight of 2000, 3.989 parts of isophorone diisocyanate, 0.010 part of stannous 2- ethylhexanoate and 10.0 parts of an ethyl acetate/n- propyl acetate mixture solution (weight ratio: 1/2) were allowed to react under nitrogen stream at 85°C for 3 hours; after addition of 10. 0 parts of a ethyl acetate/n- propyl acetate mixture solution (weight ratio: 1/2), the mixture was cooled, to give 78.718 parts of a terminal isocyanate prepolymer solvent solution. Then, 78.718 parts of the terminal isocyanate prepolymer solvent solution obtained was gradually added to a mixture of 1.031 parts of isophoronediamine, 0.261 part of di- n- butylamine, 32.5 parts of an ethyl acetate/n- propyl acetate mixture solution (weight ratio: 1/2) and 17. 5 parts of isopropyl alcohol at room temperature; and the mixture was then allowed to react at 50°C for 1 hour, to give a polyurethane resin solution (Q) having a solid content of 30% and containing a polymer having a weight- average molecular weight of 60, 000, an amine value of 3.0 mg- KOH/g- resin, and a viscosity at 25°C of 600 mPa·S.

30 parts of Titanix JR- 805 (manufactured by Tayca Corporation), 10 parts of the polyurethane resin solution (Q) and 10.0 parts of an ethyl acetate/n- propyl acetate/ isopropyl alcohol mixture solution (weight ratio: 25/50/25) were mixed under agitation and kneaded in a sand mill; and 40 parts of the polyurethane resin solution (Q) and 10.0 parts of an ethyl acetate/n- propyl acetate/ isopropyl alcohol mixture solution (weight ratio: 25/50/25) were mixed with it, to give a white printing ink (Q1) . 50 parts of an ethyl acetate/n- propyl acetate/ isopropyl alcohol mixture solution (weight ratio: 25/50/25) was added as dilution solvent to 100 parts of the white printing ink obtained (Q1) and was mixed, to give a white diluted ink (Q2) .

12 parts of copper phthalocyanine blue, 20 parts of the polyurethane resin solution (Q) and 10 parts of an ethyl acetate/n-propyl acetate/ isopropyl alcohol mixture solution (weight ratio: 25/50/25) were mixed under agitation and kneaded in a sand mill; and 20 parts of the polyurethane resin solution (Q) and 38 parts of an ethyl acetate/n- propyl acetate/ isopropyl alcohol mixture solution (weight ratio: 25/50/25) were mixed with it, to give a blue printing ink (Q3) . 50 parts of an n-propyl acetate/ isopropyl alcohol mixture solution (weight ratio: 75/25) was added as dilution solvent to 100 parts of the blue  printing ink obtained (Q3) and was mixed, to give a blue diluted ink (Q4) . The solvent composition of each of the diluted inks thus obtained was ethyl acetate/n- propyl acetate/ isopropyl alcohol at 25: 75: 25.

[Examples 9 to 23 and Comparative Examples 1 to 2]

Properties of each of the diluted printing inks A4 to Q4 obtained in Examples 9 to 23 and Comparative Examples 1 to 2 were evaluated in the following manner:

[Printability]

AnimpressiondrumofNBR (nitrilebutadienerubber) having a rubber hardness of 80 Hs, a ceramic-plated doctor blade having an edge thickness of 60 $\mu$m (base material thickness: 40 $\mu$m, one-sided ceramic layer thickness: 10 $\mu$m) , an electronically engraving plate having a chromium hardness of 1050 Hv manufactured by Toyo Prepress Co., Ltd. (stylus angle: 120°, for color ink: 250 lines/inch, for white ink:200 lines /inch), and the diluted printing ink obtained in each of Examples 9 to 23 and Comparative Examples 1 and 2 were placed in a gravure printing machine manufactured by Fuji Kikai Kogyo Co. Ltd. ; the plate was preconditioned by rotation at a doctor-blade pressure of 2 kg/cm$^2$ and a rotational velocity of 100 m/minute for 60 minutes; and then, the ink was printed on the corona-finished surface of a one-face corona-treated OPP film "Pylen P2161 (manufactured by Toyobo Co., Ltd.)" at a printing speed of 100 m/minute and a pressure of 2 kg/cm$^2$ and then dried with hot air  at 60°C, to give a print. During printing, the ink was adjusted to a particular viscosity by replenishment of each dilution solvent fed by a viscosity controller.

1. A stained print sample was bonded onto a black or white paper, and the amount of the ink deposited on the margin region (unlined region) of the paper was visually evaluated according to the following criteria:

   VG: No ink transfer observed in the nonimage region.
   G: Slight ink transfer observed in the nonimage region.
   F: Inktransfer observed in a small area of nonimage region.
   P: Inktransfer observed in a large area of nonimage region.
   VP: Ink transfer observed in the entire area of nonimage region.

2. Staining on impression drum after printing was evaluated visually.
   VG: No ink transfer observed on the impression drum surface.
   G: Slight ink transfer observed on the impression drum surface.
   F: Ink transfer observed on a small area of the impression drum surface.
   P: Ink transfer observed on a large area of the impression drum surface.
   VP: Ink transfer observed on the entire surface of the impression drum.

3. The reactivity of the used solvents with an isocyanate group-containing hardening agent commonly used as a hardening agent in isocyanate-reactive gravure inks was determined. When a solvent highly reactive is used, the isocyanate groups react with the solvent during printing, resulting in loss of the ability to form a strong coated film of the resin used by crosslinking.
VG: Solvent containing no hydroxyl group.
G: Solvent containing secondary hydroxyl groups.
F: Solvent containing primary hydroxyl groups.
P: Solvent containing one or more groups more reactive than hydroxyl group, such as amino groups.
[Table 1]

Table 1

| | | Organic solvent component ratio | | | | | | Urethane resin solution Mw | Printability | | | | Isocyanate reactivity |
| | | Ester | | | Alcohol | | | | White | | Blue | | |
| | | Ethyl acetate | n-Propyl acetate | Isobutyl acetate | n-Propyl alcohol | Isopropyl alcohol | Propylene glycol monoethylether | | Print staining | Impression drum staining | Print staining | Impression drum staining | |
|---|---|---|---|---|---|---|---|---|---|---|---|---|---|
| Example | 9 | | 72 | | | 28 | | 60000 | VG | VG | VG | VG | G |
| Example | 10 | | 75 | | | 25 | | 60000 | VG | VG | VG | VG | G |
| Example | 11 | | 83 | | | 17 | | 60000 | VG | VG | VG | VG | G |
| Reference Example | 12 | | 52 | | | 48 | | 60000 | F | VG | G | VG | G |
| Reference Example | 13 | | 88 | | | 12 | | 60000 | G | VG | G | VG | G |
| Reference Example | 14 | | 40 | | | 60 | | 55000 | F | VG | F | VG | G |
| Reference Example | 15 | | 95 | | | 5 | | 60000 | F | VG | F | VG | G |
| Reference Example | 16 | 52 | | | | 48 | | 60000 | G | VG | VG | VG | G |
| Reference Example | 17 | 40 | | | | 60 | | 60000 | G | VG | VG | VG | G |
| Reference Example | 18 | 22 | | | | 78 | | 55000 | G | VG | G | VG | G |
| Reference Example | 19 | 75 | | | | 25 | | 60000 | F | VG | F | G | G |
| Reference Example | 20 | | | 75 | | 25 | | 60000 | VG | F | VG | F | G |
| Reference Example | 21 | | 75 | | 25 | | | 40000 | VG | VG | VG | VG | F |

22

(continued)

| | | Organic solvent component ratio | | | | | | Urethane resin solution Mw | Printability | | | | Isocyanate reactivity |
|---|---|---|---|---|---|---|---|---|---|---|---|---|---|
| | | Ester | | | Alcohol | | | | White | | Blue | | |
| | | Ethyl acetate | n-Propyl acetate | Isobutyl acetate | n-Propyl alcohol | Isopropyl alcohol | Propylene glycol monoethylether | | Print staining | Impression drum staining | Print staining | Impression drum staining | |
| Reference Example | 22 | | 75 | | | | 25 | 60000 | VG | F | VG | G | G |
| Reference Example | 23 | 25 | 50 | | | 25 | | 60000 | VG | VG | VG | VG | G |
| Comparative Example | 1 | | 100 | | | | | Whitening (unsuccessful synthesis) | - | - | - | - | VG |
| | 2 | | | | | 100 | | Whitening (unsuccessful synthesis) | - | - | - | - | G |

EP 2 036 959 B1

**Claims**

1. A solvent-recoverable and recyclable printing ink composition, comprising: a polyurethane resin; one or more colorant (s); and two or more solvents selected from hydrocarbon solvents, ketone solvents, ester solvents, alcoholic solvents and glycol ether solvents, wherein 95 % by weight or more of the total amount of the solvents consist of two organic solvent components, the two organic solvent components being n-propyl acetate and isopropyl alcohol; and the component ratio (by weight) of n-propyl acetate to isopropyl alcohol is in the range of from 70 : 30 to 85 : 15, wherein the polyurethane resin is formed from a polymer polyol, an organic isocyanate compound and a chain extender as a main binder, and the organic isocyanate compound is isophorone diisocyanate.

2. The solvent-recoverable and recyclable printing ink composition according to claim 1, wherein the composition comprises three or more of the solvents above.

3. A method of recovering and recycling solvents, comprising, during printing or coating of a solvent-recoverable and recyclable printing ink of any one of claims 1 to 2, a step of recovering solvents vaporized in a solvent recovery apparatus, a step of analyzing the composition of the solvents, and a step of recycling the solvents as a printing ink raw material and/or a dilution solvent raw material.

4. The method of recovering and recycling solvents according to claim 3, wherein the analysis step is carried out by at least one method selected from gas chromatography, liquid chromatography, infrared absorption spectrometry, refractive index measurement, density ratio measurement, conductivity measurement, nuclear magnetic resonance absorption method and odor test method.

**Patentansprüche**

1. Lösungsmittelrückgewinnbare und recycelbare Drucktintenzusammensetzung, umfassend: ein Polyurethanharz, einen oder mehrere Farbstoff(e); und zwei oder mehrere Lösungsmittel gewählt aus Kohlenwasserstofflösungsmitteln, Ketonlösungsmitteln, Esterlösungsmitteln, alkoholischen Lösungsmitteln und Glykoletherlösungsmitteln, wobei 95 Gew.-% oder mehr der Gesamtmenge der Lösungsmittel aus zwei organischen Lösungsmittelkomponenten bestehen, wobei die beiden organischen Lösungsmittelkomponenten n-Propylacetat und Isopropylalkohol sind; und das Komponentenverhältnis (bezogen auf das Gewicht) von n-Propylacetat zu Isopropylalkohol im Bereich von von 70 : 30 bis 85 : 15 ist, wobei das Polyurethanharz aus einem Polymerpolyol, einer organischen Isocyanatverbindung und einem Kettenverlängerer als einem Hauptbinder gebildet wird und die organische Isocyanatverbindung Isophorondiisocyanat ist.

2. Lösungsmittelrückgewinnbare und recycelbare Drucktintenzusammensetzung nach Anspruch 1, wobei die Zusammensetzung drei oder mehrere der obigen Lösungsmittel umfasst.

3. Verfahren zur Rückgewinnung und zum Recycling von Lösungsmitteln, umfassend während des Druckens oder Auftragens einer lösungsmittelrückgewinnbaren und recycelbaren Drucktinte nach einem der Ansprüche 1 bis 2, einen Schritt des Rückgewinnens der Lösungsmittel, die in einer Lösungsmittelrückgewinnungsvorrichtung verdampft sind, einen Schritt des Analysierens der Lösungsmittelzusammensetzung und einen Schritt des Recyclings der Lösungsmittel als Drucktintenrohmaterial und/oder Verdünnungslösungsmittelrohmaterial.

4. Verfahren zur Rückgewinnung und zum Recycling von Lösungsmitteln nach Anspruch 3, wobei der Analyseschritt mittels mindestens eines Verfahrens durchgeführt wird, das ausgewählt ist aus Gaschromatographie, Flüssigkeitschromatographie, Infrarotabsorptionsspektrometrie, Brechungsindexmessung, Dichteverhältnismessung, Leitfähigkeitsmessung, Kernspinresonanzabsorptionsverfahren und Geruchstestverfahren.

**Revendications**

1. Composition d'encre d'impression permettant la récupération et le recyclage de solvant, comprenant : une résine de polyuréthane ; un ou plusieurs colorant(s) ; et deux ou plusieurs solvants sélectionnés parmi les solvants de type hydrocarbure, les solvants de type cétone, les solvants de type ester, les solvants alcooliques et les solvants d'éther de glycol, dans laquelle la quantité de 95 % en poids ou plus de la quantité totale des solvants est constituée de deux composants solvants organiques, les deux composants solvants organiques étant l'acétate de n-propyle et l'alcool d'isopropyle ; et le rapport des composants (en poids) de l'acétate de n-propyle sur l'alcool d'isopropyle se situe dans la plage de 70:30 à 85:15, dans laquelle la résine de polyuréthane est formée à partir d'un polyol polymère, d'un composé isocyanate organique et d'un agent d'extension de chaîne comme principal liant, et le composé isocyanate organique est le diisocyanate d'isophorone.

2. Composition d'encre d'impression permettant la récupération et le recyclage de solvant selon la revendication 1, dans laquelle la composition comprend trois des solvants ci-dessus ou plus.

3. Procédé de récupération et de recyclage de solvants, comprenant, durant l'impression ou le couchage d'une encre d'impression permettant la récupération et le recyclage de solvant selon l'une quelconque des revendications 1 à 2, une étape de récupération des solvants vaporisés dans un appareil de récupération de solvant, une étape d'analyse de la composition des solvants, et une étape de recyclage des solvants comme matière première d'encre d'impression et/ou matière première de solvant de dilution.

4. Procédé de récupération et de recyclage de solvants selon la revendication 3, dans lequel l'étape d'analyse est conduite selon au moins un procédé sélectionné parmi la chromatographie en phase gazeuse, la chromatographie liquide, la spectrométrie d'absorption infrarouge, la mesure d'indice de réfraction, la mesure du rapport des densités, la mesure de conductivité, le procédé d'absorption par résonance magnétique nucléaire et le procédé de test de l'odeur.

FIG.1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 7247456 A
- EP 1134239 A
- WO 03066711 A
- WO 02051664 A
- JP 8269152 A
- JP 2006162122 A
- JP 2006197960 A
- JP 2006226157 A
- JP 2007110868 A
- JP 2007153652 A

### Non-patent literature cited in the description

- **HIDEKI YASUDA.** *J. Japanese Printing Society,* 2006, vol. 43 (6), 404-410
- **MASASHI SENMOTO.** *J. Japanese Printing Society,* 2007, vol. 44 (1), 8-14
- Studies on Measurements against Environmental Hazardous Substances (measures to prevent volatile organic compound (VOC) emission. Japan Environmental management Association for Industry. March 2006